# EUROPÄISCHE PATENTSCHRIFT

(11) **EP 2 976 699 B1**
(45) Veröffentlichungstag und Bekanntmachung des Hinweises auf die Patenterteilung: **22.02.2023**
(21) Anmeldenummer: 14709619.2
(22) Anmeldetag: 10.03.2014
(51) Int. Cl.: B60K 35/00, B60K 37/06, G06F 3/0482, G06F 3/0486, G06F 3/04886

(54) **INFORMATIONSWIEDERGABESYSTEM FÜR EIN FAHRZEUG UND VERFAHREN ZUM BEREITSTELLEN VON INFORMATIONEN FÜR DEN BENUTZER EINES FAHRZEUGS**
INFORMATION REPRODUCTION SYSTEM FOR A VEHICLE AND METHOD FOR PROVIDING INFORMATION FOR THE USER OF A VEHICLE
SYSTÈME DE REPRODUCTION D'INFORMATION POUR UN VÉHICULE ET PROCÉDÉ DE MISE À DISPOSITION D'INFORMATION POUR L'UTILISATEUR D'UN VÉHICULE

(30) Priorität: 22.03.2013 DE 102013002891
(43) Veröffentlichungstag der Anmeldung: 27.01.2016
(73) Patentinhaber: Volkswagen Aktiengesellschaft, 38440 Wolfsburg (DE)
(72) Erfinder: WILD, Holger, 10179 Berlin (DE); KÖTTER, Nils, 38118 Braunschweig (DE)
(86) Internationale Anmeldenummer: PCT/EP2014/054594
(87) Internationale Veröffentlichungsnummer: WO 2014/146925

(56) Entgegenhaltungen:
- WO-A1-2007/069835
- WO-A1-2010/110613
- WO-A2-2012/108668
- DE-A1-102008 021 186
- DE-A1-102009 058 145

## Beschreibung

Die vorliegende Erfindung liegt auf dem Gebiet von Konzepten für die Informationswiedergabe in Fahrzeugen und bezieht sich insbesondere auf ein Informationswiedergabesystem für ein Fahrzeug und ein Verfahren zum Bereitstellen von Informationen für einen Benutzer eines Fahrzeugs.

In modernen Fahrzeugen gibt es bereits heute eine große Anzahl von Geräten, die der Wiedergabe von unterschiedlichsten Informationen dienen. Die wiederzugebenden Informationen reichen von Fahrzeugzustandsparametern, wie z.B. Geschwindigkeit, Motordrehzahl, Tankfüllstand oder Kilometerzähler, über Navigations- und Kommunikationsinformationen bis hin zu Unterhaltungsmedien, wie z.B. Filme, Radio oder Spiele. Dabei wird die Anzahl der verfügbaren Informationen immer größer. Entsprechend steigt auch die Anzahl und Vielfalt der Anzeigesysteme. Heute können beispielsweise neben analogen Anzeigeinstrumenten auch LED-Anzeigen (Light Emitting Diode, Leuchtdiode), TFT-Bildschirme (Thin Film Transistor, Dünnschichttransistor) oder berührungsempfindliche Bildschirme, sogenannte Touchscreens, vorgefunden werden.

Die Druckschrift DE 10 2010 048 745 A1 offenbart eine Benutzerschnittstelle in einem Kraftfahrzeug. Die Benutzerschnittstelle umfasst mindestens eine Bedieneinrichtung und eine Anzeigeeinrichtung. Hierbei ist eine Auswahl eines auf der Anzeigeeinrichtung dargestellten Objekts mittels der Bedieneinrichtung erfassbar. Dabei sind bei Detektion eines Beginns einer Verschiebeoperation des Objekts vorbestimmte objektspezifische Zielbereiche graphisch kennzeichenbar, die auf der Anzeigeeinrichtung dargestellt sind.

Ferner beschreibt die Druckschrift DE 10 2010 013 843 A1 eine Bedienvorrichtung mit einer Anzeigefläche zur Darstellung von Informationen und einem mechanischen Bedienelement, das ein bewegbares Betätigungselement umfasst, das in Betrachtungsrichtung auf die Anzeigefläche zumindest bereichsweise vor der Anzeigefläche angeordnet ist und einen Teil der Anzeigefläche überdeckt. Das bewegbare Betätigungselement ist zumindest in einem vor der Anzeigefläche angeordneten Bereich transparent, sodass eine auf der Anzeigefläche wiedergegebene Anzeige durch den transparenten Bereich des Betätigungselements hindurch erkennbar ist.

Die Druckschrift DE 10 2010 013 170 A1 offenbart eine Vorrichtung zur Bedienung mehrerer unterschiedlicher Funktionen eines Kraftfahrzeugs, die ein Bedienelement, mit welchem jeweils eine der mehreren unterschiedlichen Funktionen ansteuerbar sind, und ein berührungssensitives Feld aufweist, welches mehrere Abschnitte aufweist, denen jeweils zumindest temporär eine der unterschiedlichen Funktionen zugeordnet sind und die mit der jeweiligen Funktion entsprechenden Symbolen versehen sind. Durch Auswählen eines der Abschnitte ist eine Funktion auswählbar. Mittels des Bedienelements ist jeweils die zuvor aus dem berührungssensitiven Feld ausgewählte Funktion ansteuerbar. An dem Bedienelement oder in unmittelbarer Nähe des Bedienelements ist eine Anzeigeeinrichtung vorgesehen, in welcher die jeweils ausgewählte Funktion mittels eines Symbols anzeigbar ist.

DE 10 2009 058145 A1 offenbart ein berührungsempfindliches Anzeigegerät, bei dem der Nutzer die Anzeigefläche in einzelne Teilbereiche mittels berührender Gesten unterteilen kann. Es ist offenbart, dass der Nutzer Informationen eines Teilbereichs in einem zweiten Teilbereich mit erhöhtem Informationsgehalt darstellen lassen kann. Des Weiteren wird beschrieben, dass eine Statusleite am unteren Bildschirmrand angezeigt werden kann.

Die Bedienung von solchen Informationswiedergabesystemen in einem Fahrzeug, d.h. insbesondere die Menüsteuerung sowie die Einstellung von Funktionalitäten, erfordert unterschiedlich hohen Aufwand, der die Aufmerksamkeit eines Fahrers über eine gewisse Zeitspanne hinweg erfordert. Die Ablenkung von der Straße sollte jedoch möglichst gering gehalten werden, um eine möglichst sichere Benutzung des Informationswiedergabesystems zu ermöglichen.

Es besteht daher ein Bedarf daran, ein verbessertes Konzept für eine Informationswiedergabe in Fahrzeugen zu schaffen, die eine Erhöhung der Benutzungssicherheit ermöglicht.

Diesem Bedarf tragen ein Informationswiedergabesystem gemäß Patentanspruch 1, ein Verfahren zum Bereitstellen von Informationen für einen Benutzer eines Fahrzeugs gemäß Patentanspruch 14 und ein Programm mit einem Programmcode zum Durchführen eines solchen Verfahrens gemäß Patentanspruch 15 Rechnung.

Einige Ausführungsbeispiele beziehen auch ein Informationswiedergabesystem für ein Fahrzeug, mit einer Eingangseinrichtung, die ausgelegt ist, um ein Auswahlsignal zu empfangen. Außerdem umfasst das Informationswiedergabesystem einen Prozessor, der ausgelegt ist, um ein Video- oder Steuersignal zu erzeugen, sodass eine an einem Rand einer berührungsempfindlichen Anzeigefläche einer Anzeigeeinrichtung angeordnete Statusleiste und ein an die Statusleiste angrenzender Anzeigebereich basierend auf dem Video- oder Steuersignal durch die Anzeigeeinrichtung auf der berührungsempfindlichen Anzeigefläche wiedergebbar sind. Das Auswahlsignal weist dabei Informationen über einen Anfangspunkt und einen Endpunkt einer die Anzeigefläche der Anzeigeeinrichtung ununterbrochen berührenden Bewegung durch einen Benutzer auf. Hierbei liegt der Anfangspunkt in dem Bereich der Statusleiste und der Endpunkt in dem Anzeigebereich. Der Prozessor ist dabei ausgelegt, um das Video- oder Steuersignal basierend auf dem Auswahlsignal zu erzeugen, sodass ein Inhalt einer an dem Ort des Anfangspunktes auswählbar angezeigten Inhaltskategorie in zumindest einem zumindest teilweise in einer den Endpunkt umfassenden Hälfte des Anzeigebereichs gelegenen Teilbereich des Anzeigebereichs mit im Vergleich zu dem in der Statusleiste angezeigten Informationsgehalt erweiterten Informationsgehalt durch die Anzeigeeinrichtung wiedergebbar ist. Weiterhin umfasst das Informationswiedergabesystem eine Ausgangseinrichtung, die ausgebildet ist, um das Video- oder Steuersignal an eine Anzeigeeinrichtung bereitzustellen.

Der Benutzer kann also einen Inhalt aus der Statusleiste auswählen, welcher er im Anzeigebereich dargestellt haben möchte. Da dies eine während der Fahrt sehr häufig genutzte Funktion ist (z. B. Anzeigen von Routenführungen oder Karten, Anzeigen von Adress- oder Telefondaten, Anzeigen von Radiosendern oder Medieninhalten) ist eine einfache und intuitive Bedienbarkeit wünschenswert. Durch Auswahl einer Inhaltskategorie durch Berührung und Ziehen des Inhaltes auf den gewünschten Darstellungsort kann eine komplizierte Menüführung umgangen, und die einfache und intuitive Bedienbarkeit gewährleistet werden. Dadurch kann die Zeitspanne verringert werden, die der Benutzer (z.B. der Fahrer des Fahrzeugs) benötigt, um an seine gewünschten oder benötigten Informationen zu gelangen. Dadurch kann die Benutzungssicherheit des Informationswiedergabesystems deutlich erhöht werden. Ferner kann der Benutzer deutlich flexibler auf unterschiedliche Inhalte zugreifen.

Bei einigen Ausführungsbeispielen kann der Endpunkt der ununterbrochen berührenden Bewegung innerhalb eines bereits Inhalte einer Inhaltskategorie aufweisenden Teilbereichs des Anzeigebereichs liegen. Der Prozessor kann dann basierend auf dem Auswahlsignal das Video- oder Steuersignal erzeugen, sodass der bereits vorhandene Inhalt in dem den Endpunkt umfassenden Teilbereich in einen anderen Teilbereich verschoben durch die Anzeigeeinrichtung wiedergebbar ist. Somit kann ein bereits wiedergegebener Inhalt auch nach Auswahl eines neuen Inhalts weiterhin dargestellt werden. Dies bietet dem Benutzer eine größere Übersicht über potentiell wichtige Informationen, die er gleichzeitig im Auge behalten möchte (z. B. aktuelle Routenführung und Klimaeinstellungen).

Bei einigen Ausführungsbeispielen weist das Auswahlsignal zusätzliche Informationen über einen innerhalb eines die Statusleiste umfassenden Randbereichs liegenden Anfangspunkt und einen im Vergleich zu dem Anfangspunkt näher an dem Rand der Anzeigefläche liegenden Endpunkt einer ununterbrochen berührenden Bewegung oder zusätzliche Informationen über einen innerhalb eines keiner Informationskategorie zugeordneten Bereichs der Statusleiste liegenden Berührungspunkt aufweist. Der Randbereich erstreckt sich dabei von einem die Statusleiste begrenzenden Rand der Anzeigefläche bis zu einem Abstand, der der zweifachen Breite der Statusleiste entspricht. Der Prozessor ist hierbei ausgelegt, um basierend auf dem Auswahlsignal das Video- oder Steuersignal zu erzeugen, sodass die Statusleiste basierend auf der erfassten Berührung ausgeblendet wird. Somit lässt sich die Statusleiste ausblenden, wodurch der Anzeigebereich vergrößert wird, was wünschenswert ist, wenn eine Auswahl von Inhalten über längere Zeit beibehalten werden soll.

Zusätzlich kann das Auswahlsignal optional Informationen über einen maximal um eine Breite der Statusleiste von dem Rand der Anzeigeeinrichtung entfernt liegenden Anfangspunkt und einem im Vergleich zu dem Anfangspunkt von dem Rand der Anzeigeeinrichtung weiter entfernt liegenden Endpunkt einer ununterbrochen berührenden Bewegung auf, Informationen über einen maximal um die Breite der Statusleiste von dem Rand der Anzeigeeinrichtung entfernt liegenden Berührungspunkt auf oder Informationen über eine Annäherung eines Benutzers an die Anzeigeeinrichtung auf. Der Prozessor ist hierbei ausgelegt, um basierend auf dem Auswahlsignal das Video- oder Steuersignal zu erzeugen, sodass die Statusleiste auf der Anzeigefläche der Anzeigeeinrichtung eingeblendet wird. Sollte die Auswahl einer neuen Inhaltskategorie wieder erforderlich werden, kann die Statusleiste wieder sehr einfach eingeblendet werden. Damit stehen die Auswahlmöglichkeiten sofort wieder zur Verfügung.

In einigen Ausführungsbeispielen weist das Auswahlsignal Information über einen innerhalb eines einen Inhalt einer Inhaltskategorie wiedergebenden Teilbereichs liegenden Anfangspunkt und einen dem von einem Benutzer aus gesehen rechten oder linken Rand der Anzeigefläche der Anzeigeeinrichtung näher als ein vordefinierter Abstand liegenden Endpunkt einer ununterbrochen berührenden Bewegung auf. Der Prozessor ist hierbei ausgelegt, um basierend auf dem Auswahlsignal ein weiteres Video- oder Steuersignal zu erzeugen, sodass zumindest teilweise der Inhalt des den Anfangspunkt aufweisenden Teilbereichs auf einem weiteren zusätzlichen Anzeigegerät wiedergebbar ist. Möchte der Benutzer also eine Information auf einem anderen Gerät, so kann diese durch einfaches Ziehen des Inhaltes von einem Gerät auf das andere übertragen werden. Dies kann z.B. erwünscht sein, da sich beispielsweise ein Kombiinstrument besser im Sichtfeld des Benutzers liegen kann, als ein Mittelkonsoleninstrument. Auf diese Weise kann z.B. ein Fahrer gleichzeitig das Kombiinstrument und die vor ihm liegende Straße im Blick behalten. Durch diese zusätzliche Funktion kann die Benutzungssicherheit weiter erhöht werden.

Bei einigen Ausführungsbeispielen weist das Auswahlsignal zusätzlich Information über einen innerhalb einer an einem Rand der Anzeigefläche der Anzeigeeinrichtung wiedergegebenen Kontrollleiste liegenden Berührpunkt auf. Der Prozessor ist hierbei ausgelegt, um basierend auf dem Auswahlsignal ein Steuersignal zu erzeugen, sodass eine einer in dem Anzeigebereich angezeigte und an die Kontrollleiste angrenzende Inhaltskategorie entsprechende Funktionalität basierend auf der Information über den Berührungspunkt gesteuert wird. Die Möglichkeit der Anzeige von Inhalten und der Bedienung von Funktionalitäten auf demselben Gerät vereinfacht deutlich die Bedienung. Zudem wird die Handhabung des Informationswiedergabesystems intuitiver, da die Bedienung durch die gleichzeitige Darstellung und Steuerung interaktiv gestaltet ist. Der Benutzer kann deutlich schneller auf verschiedene Funktionalitäten im Fahrzeug (z.B. Klimaanlage, Radio, Telefon) zugreifen.

Nachfolgend werden unter Bezugnahme auf die beigefügten Figuren Ausführungsbeispiele näher beschrieben und erläutert.
- Fig. 1: zeigt ein Blockdiagramm eines Informationswiedergabesystems;
- Fig. 2a, 2b: zeigen schematische Beispiele der Auswahl von Inhaltskategorien aus der Statusleiste;
- Fig. 3a, 3b: zeigen schematische Beispiele der Auswahl von Inhaltskategorien aus der Statusleiste;
- Fig. 4a, 4b: zeigen eine schematische Darstellung des Ein- und Ausblendens der Statusleiste;
- Fig. 5a-5d: zeigen eine schematische Darstellung des Verschiebens von Inhalten innerhalb der Anzeigefläche der Anzeigeeinrichtung;
- Fig. 6: zeigt eine schematische Darstellung des Verschiebens von Inhalten von der Anzeigefläche der Anzeigeeinrichtung auf die Anzeigefläche eines weiteren Anzeigegeräts;
- Fig. 7a, 7b: zeigen eine schematische Darstellung des individuellen Bestückens der Statusleiste mit Inhalten;
- Fig. 8: zeigt ein Blockdiagramm eines Informationswiedergabesystems; und
- Fig. 9: zeigt ein Flussdiagramm eines Verfahrens zum Bereitstellen von Informationen für einen Benutzer eines Fahrzeugs.

Bei der nachfolgenden Beschreibung der beigefügten Figuren, die Ausführungsbeispiele zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

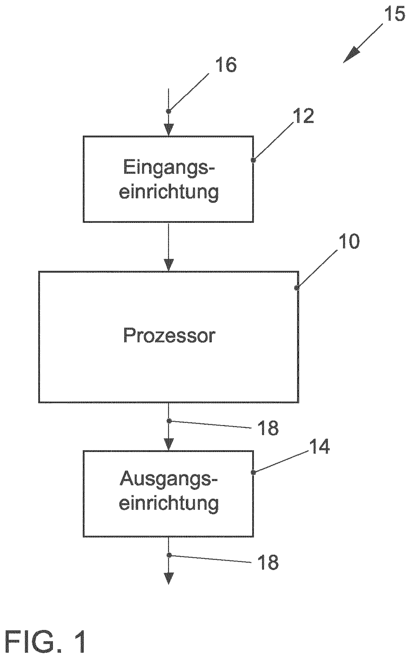

Fig. 1 zeigt ein Blockdiagramm eines Informationswiedergabesystems 15 für ein Fahrzeug entsprechend einem Ausführungsbeispiel. Das Informationswiedergabesystem 15 für ein Fahrzeug umfasst eine Eingangseinrichtung 12, einen Prozessor 10 und eine Ausgangseinrichtung 14. Dabei ist der Prozessor 10 mit der Eingangseinrichtung 12 und der Ausgangseinrichtung 14 verbunden. Der Prozessor 10 erzeugt ein Video- oder Steuersignal 18, 18a, sodass eine an einem Rand einer berührungsempfindlichen Anzeigefläche einer Anzeigeeinrichtung angeordnete Statusleiste und ein an die Statusleiste angrenzender Anzeigebereich basierend auf dem Video- oder Steuersignal 18, 18a durch die Anzeigeeinrichtung auf der berührungsempfindlichen Anzeigefläche wiedergebbar sind oder wiedergegeben werden. Ferner empfängt die Eingangseinrichtung 12 ein Auswahlsignal 16, das Informationen über einen Anfangspunkt und einen Endpunkt einer die Anzeigefläche der Anzeigeeinrichtung ununterbrochen berührenden Bewegung durch einen Benutzer aufweist. Wenn der Anfangspunkt in dem Bereich der Statusleiste und der Endpunkt in dem Anzeigebereich liegt, erzeugt der Prozessor 10 das Video- oder Steuersignal 18 basierend auf dem Auswahlsignal 16, sodass ein Inhalt einer an dem Ort des Anfangspunktes auswählbar angezeigten Inhaltskategorie in zumindest einem zumindest teilweise in einer den Endpunkt umfassenden Hälfte des Anzeigebereichs gelegenen Teilbereich des Anzeigebereichs mit im Vergleich zu dem in der Statusleiste angezeigten Informationsgehalt erweiterten Informationsgehalt durch die Anzeigeeinrichtung wiedergebbar ist oder wiedergegeben wird. Die Ausgangseinrichtung 14 stellt ferner das Video- oder Steuersignal 18 an eine Anzeigeeinrichtung bereit.

Durch das beschriebene Konzept kann die Benutzungssicherheit eines Informationswiedergabesystems 15 in einem Fahrzeug erhöht werden, da der Benutzer auf einfache und übersichtliche Art und Weise an die von ihm benötigten oder gewünschten Informationen gelangen kann. Durch die Möglichkeit, dass der Benutzer beliebige Inhaltskategorien in der leicht überschaubaren Statusleiste auf der Anzeigefläche auswählen kann und dem Inhalt mittels einer einfachen Geste anzeigen lassen kann, ist die von ihm gewünschte Information schnell und ohne großen Aufwand verfügbar. Das Auswählen von Inhalten über die Statusleiste bietet eine schnellere Alternative zu einer komplizierten Steuerung z. B. über ein Hauptmenü. Die Darstellung von Inhalten am Endpunkt der berührenden Bewegung gewährleistet eine intuitive Bedienbarkeit des Informationswiedergabesystems 15. Dadurch kann sich der Benutzer z.B. insgesamt besser auf das Lenken des Fahrzeugs konzentrieren und trotzdem die gewünschten Informationen erhalten.

Die Eingangseinrichtung 12 kann beispielsweise eine eigenständige Hardwareeinheit (z. B. ein an einen Kommunikationsbus angeschlossener Empfänger) oder auch Teil des Prozessors (z. B. Eingangsschnittstelle des Prozessors) sein.

Das Auswahlsignal 16 kann unterschiedlichste Informationen aufweisen, die in Zusammenhang mit der Bedienung des Informationswiedergabesystems 15 stehen. Zumindest enthält das Auswahlsignal 16 Informationen über einen Anfangspunkt und einen Endpunkt einer unterbrochen berührenden Bewegung, durch einen Benutzer, wenn ein Benutzer eine Inhaltskategorie in der Statusleiste auswählt und mittels des Endpunktes der berührenden Bewegung den Darstellungsort festlegt. Liegt der Endpunkt beispielsweise in der linken Hälfte des Anzeigebereichs, kann der Darstellungsort beispielsweise ein in der linken Hälfte des Anzeigebereichs gelegenes Drittel des Anzeigebereichs, oder zwei Drittel des Anzeigebereichs, die die linke Hälfte vollständig einschließen, umfassen. Ist dem Ort des Anfangspunktes eine Inhaltskategorie zugeordnet, kann durch die Berührung eine Auswahl getätigt werden. Die Informationen können dabei beispielsweise zeitlich aufeinander folgend oder auch beliebig zeitlich zueinander versetzt in dem Auswahlsignal 16 auftreten. Ferner können die Informationen in dem Auswahlsignal kodiert sein, sodass der Prozessor 10 die entsprechenden Informationen wieder rekonstruieren kann.

Die Statusleiste kann somit die Funktion eines Auswahlbereichs erfüllen. Das Informationswiedergabesystem 15 kann basierend auf dem Video- oder Steuersignal 18 in der Statusleiste auswählbare Inhaltskategorien für den Benutzer anzeigen. Die Statusleiste ist beispielsweise ein Bereich der genutzten Anzeigefläche einer Anzeigeeinrichtung in dem durch Symbole oder kurzem Text (z.B. Abkürzungen oder Stichwörter) auswählbare Inhaltskategorien angezeigt werden. Dieser Bereich befindet sich an einem Rand der Anzeigefläche. Z.B. begrenzt ein Rand der Anzeigefläche zumindest an einer Seite auch den Bereich der Statusleiste. Dies kann von einem Benutzer aus gesehen z.B. an dem oberen, unteren, linken oder rechten Rand der Anzeigefläche sein.

Dabei ist die Anzeigefläche einer Anzeigeeinrichtung beispielsweise eine maximale Fläche der Anzeigeeinrichtung, auf der basierend auf dem Video- oder Steuersignal 18 ein für den Benutzer sichtbar veränderbarer Inhalt angezeigt werden kann. Dies kann im Vergleich zu einer maximalen Anzeigefläche der Anzeigeeinrichtung (die meist rechteckig oder quadratisch ist) kleiner sein, da Teile davon für den Benutzer von anderen Fahrzeugteilen aus funktionalen Gründen oder Designgründen verdeckt sein können.

Die Anzeigeeinrichtung kann beispielsweise ein berührungsempfindlicher Bildschirm, ein sogenannter Touchscreen sein. Die Anzeigeeinrichtung kann ein einer beliebigen Stelle im Fahrzeug fest installiert (z.B. im Mittelbereich oder der Mittelkonsole des Fahrzeugs) sein oder auch transportabel (z.B. ein Mobiltelefon oder Tablet) sein.

Der Anzeigebereich dient zur Wiedergabe von Inhalten von einer oder mehreren Inhaltskategorien. Der Anzeigebereich nimmt eine deutlich größere Teilfläche der Anzeigefläche der Anzeigeeinrichtung ein (z.B. eine mehr als 2mal, mehr als 5mal oder mehr als 10x so große Teilfläche) als die Statusleiste. Daher kann in dem Anzeigebereich Inhalte einer Inhaltskategorie mit deutlich höherem Informationsgehalt für den Benutzer angezeigt werden als in der Statusleiste. Der Anzeigebereich grenzt an die Statusleiste an. In anderen Worten, zumindest ein Teil eines Randes der Statusleiste bildet auch einen Teil eines Randes des Anzeigebereichs. Ein Teilbereich des Anzeigebereichs ist beispielsweise ein Bereich, in dem eine Anzeigeeinrichtung basierend auf dem Video- oder Steuersignal 18, 18a Inhalte einer oder mehrerer Inhaltskategorien anzeigen kann. Es können beispielsweise zwei Teilbereiche existieren. Deren Größenverhältnis kann z. B. ½ : ½, 1/3 : 2/3 oder 1/4 : 3/4 betragen. Ist eine Unterteilung des Anzeigebereichs vorhanden, können die Teilbereiche aneinander grenzen. Weist der Anzeigebereich keine weitere Unterteilung auf, so kann ein Inhalt auf dem gesamten Anzeigebereich dargestellt werden. Begrenzt auf den Anzeigebereich oder Teilbereiche des Anzeigebereichs, kann Inhalt mit mehr Informationsgehalt als in der Statusleiste dargestellt werden.

Eine ununterbrochen berührende Bewegung kann eine sogenannte Ziehbewegung sein. Ein Benutzer kann diese Bewegung z. B. mit seinem Finger, aber auch mit einem Gegenstand, z. B. einem Bedienelement, ausführen. Der Finger des Benutzers oder der Gegenstand steht dabei in ständigen Kontakt zu der berührungsempfindlichen Anzeigefläche. Setzt der Benutzer seinen Finger oder einen Gegenstand auf die Anzeigefläche auf, kann er damit einen Anfangspunkt definieren. Setzt der Benutzer seinen Finger oder einen Gegenstand von der Anzeigefläche ab, kann er dadurch einen Endpunkt definieren. Da ein Finger oder ein Gegenstand meist eine endliche Auflagefläche aufweisen, kann der Anfangspunkt und/oder der Endpunkt beispielweise einen Flächenschwerpunkt der jeweiligen Auslagefläche entsprechen oder einem ersten Punkt den die berührungsempfindliche Anzeigefläche bei Annäherung an die Anzeigefläche registriert und einem letzten Punkt den die berührungsempfindliche Anzeigefläche bei Entfernen von der Anzeigefläche registriert entsprechen.

Eine Inhaltskategorie kann beispielsweise einen Oberbegriff, wie z.B. Medien, Karten, Navigation, fahrtbezogene Informationen oder sicherheitsrelevante Daten, aber auch einen untergeordneten Begriff, wie z.B. bestimmte Radiosender, Interpreten, Musikalben, einzelne Lieder, Kartenausschnitte, Routen, Ziele, Wegpunkte, Drehzahl, Kraftstoffverbrauch, Ölstand oder den Abstand eines vorausfahrenden Fahrzeugs, repräsentieren.

Ein Inhalt einer Inhaltskategorie kann beispielsweise Detailinformation zu der Inhaltskategorie enthalten. Der Inhalt ist also thematisch der Inhaltskategorie zugeordnet. So kann beispielsweise eine Navigationskarte als Inhalt der Inhaltskategorie Navigation zugeordnet werden, jedoch nicht der Inhaltskategorie Radiosender. In anderen Worten, ein angezeigter Inhalt kann eine Inhaltskategorie zugeordnet werden, also beispielsweise Name und Frequenz eines Radiosenders der Inhaltskategorie Radio, der Name eines aktuell wiedergegebenen Liedes, gegebenenfalls mit Name, Interpret, Album, Erscheinungsjahr oder eine Zeitleiste der Inhaltskategorie wiederzugebendes Lied, eine Kartendarstellung oder ein Routenverlauf der Inhaltskategorie Navigation oder digital dargestellte Visualisierungen von Drehzahlmesser oder Tankanzeige der Inhaltskategorie Fahrzeugzustand. In anderen Worten, wiederzugebende Inhalte können, ebenso wie ihre Quellen unterschiedlichster Art sein. Beispielsweise kann es sich bei wiederzugebenden Inhalt um Unterhaltungsinformationen (z. B. Film, Radio oder Spiele), Fahrzeugzustandsinformationen (z. B. Geschwindigkeit, Motortemperatur, Motordrehzahl oder Kilometerstand), Kommunikationsinformationen (z. B. Telefonbuch) oder Navigationsdaten handeln. Ein Inhalt oder eine Information kann dabei beliebig definiert werden. Ein Inhalt kann z. B. ein einzelnes oder mehrere Bits des Video- oder Steuersignals, ein darzustellender Wert (z. B. Geschwindigkeit), ein ganzes Bild (z. B. ein Bild einer Navigationskarte oder eine Zusammenstellung von wiedergebenden Inhalten, die gemeinsam auf einem Bild dargestellt werden), oder ein Bildausschnitt o. ä. sein. Entsprechend kann eine Informationsquelle beispielsweise ein DVD-Player, ein Radiogerät, ein Computer, ein Laptop, ein Fahrzeugsensor oder ein Navigationsgerät sein. Die Informationen können in einem für die jeweilige Informationsquelle üblichen Datenformat zur Verfügung gestellt werden.

Der Prozessor erzeugt das das Video- oder Steuersignal 18, sodass der Inhalt der ausgewählten Inhaltskategorie in zumindest einem zumindest teilweise in einer den Endpunkt umfassenden Hälfte des Anzeigebereichs gelegenen Teilbereich des Anzeigebereichs. In anderen Worten, der Inhalt wird zumindest teilweise in jener Hälfte des Anzeigebereichs, in der auch der Eckpunkt liegt. Dabei kann der Anzeigebereich aus der Sicht des Benutzers z.B. vertikal oder horizontal in zwei Hälften geteilt sein. Beispielsweise kann der Anzeigebereich aus Sicht des Benutzers vertikal geteilt werden, wenn sich die Statusleiste im Wesentlichen (mit ihrer längeren Seite) entlang eines horizontalen Randes der Anzeigefläche erstreckt und umgekehrt. Zumindest teilweise den Inhalt in der Hälfte des Endpunkts anzeigen bedeutet z.B. dass sich der Bereich in dem der Inhalt angezeigt wird auch bis in die andere Hälfte erstrecken kann. Ferner, ist damit auch umfasst, dass der Endpunkt nicht in dem Bereich liegen muss, in dem der Inhalt angezeigt wird, da dieser Bereich auch deutlich kleiner als eine Hälfte des Anzeigebereichs sein kann (z.B. 1/3 oder ¼) und es ausreicht durch den Endpunkt der berührenden Bewegung jene Hälfte des Anzeigebereichs auszuwählen, in der der Inhalt angezeigt werden soll. Der Endpunkt kann jedoch auch in dem Bereich liegen, in dem der Inhalt angezeigt wird.

Ein Fahrzeug kann z. B. ein Motorrad, ein Personenkraftwagen, ein Lastkraftwagen, ein Schiff oder ein Flugzeug sein. Der Benutzer des Informationswiedergabesystems 15 kann beispielsweise ein Fahrer oder ein Beifahrer eines Fahrzeugs sein.

Der Prozessor 10 kann z. B. das Video- oder Steuersignal 18 in einem Format bereitstellen, das von der Anzeigeeinrichtung (oder auch von zusätzlichen Anzeigeeinrichtungen) zu Wiedergabe von Informationen (z. B. in Form von Bildern) verarbeitet werden kann.

Die Anzeigeeinrichtung und jede weitere Anzeigeeinrichtung können optionale Teile des Informationswiedergabesystems 15 sein, oder externe Komponenten, an die das Informationswiedergabesystem 15 angeschlossen werden kann, sein.

Die Anzeigeeinrichtung erfüllt außerdem auch die Funktion einer Eingabeeinrichtung, die z. B. das Auswahlsignal 16 erzeugt und der Eingangseinrichtung 12 des Prozessors 10 bereitstellt. Die Anzeigeeinrichtung ist berührungsempfindlich ausgestattet (sogenannter Touchscreen).

Im Folgenden werden weitere Ausführungsbeispiele beschrieben, die optionale, zusätzliche oder alternative Funktionalitäten realisieren, die jedoch einzeln oder in Kombination miteinander mit dem zuvor beschriebenen Konzept und einem oder mehreren der beschriebenen Ausführungsbeispiele kombinierbar sind.

Ein Informationswiedergabesystem 15 kann beispielsweise Teil eines sogenannten Infotainmentsystems (von Information und Englisch Entertainment = Unterhaltung) sein. Die Eingangseinrichtung 12 kann hierbei allgemein einem Empfangsmittel entsprechen, wie beispielsweise einem Empfänger, einer Schnittstelle, einem Anschluss, etc. Die Eingangseinrichtung 12 kann z. B. eine Schnittstelle zur drahtlosen oder drahtgebundenen Kommunikation umfassen.

Das Video- oder Steuersignal 18 kann z. B. ein elektronisches, ein optisches oder ein Radiosignal sein. Die Statusleiste kann beispielsweise als reines Textmenü, in Form von bildlichen Darstellungen (sogenannten Icons) oder als eine Mischung aus beiden ausgeführt sein. Die Ausgangseinrichtung 14 kann, analog zu der Eingangseinrichtung 12, z. B. eine Schnittstelle oder ein Anschluss sein, oder auch jede Art von Sendeeinrichtung bzw. eine Schnittstelle zu einer solchen. Dabei können dieselben oder ähnliche drahtlosen oder drahtgebundenen Kommunikationsmöglichkeiten in Frage kommen, wie auch bei der Eingangseinrichtung 12. Eingangseinrichtung 12 und Ausgangseinrichtung 14 können beispielsweise im Prozessor 10 integriert sein oder externe Komponenten darstellen, die beispielsweise über ein Datenbussystem mit dem Prozessor 10 in Verbindung stehen.

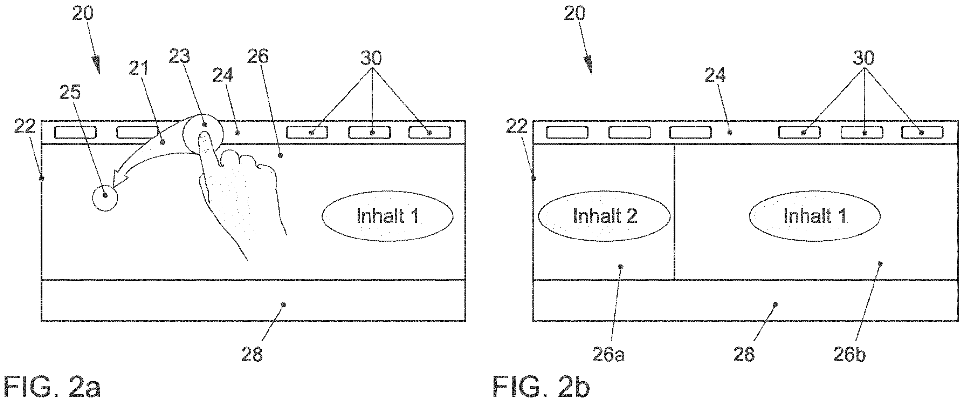

Fig. 2a und 2b zeigen ein Beispiel einer Darstellung auf einer Anzeigeeinrichtung 20. Hierbei werden für dieses Beispiel die Bedienschritte des Auswählens einer Inhaltskategorie 30 (Fig. 2a), und der Darstellung der Inhaltskategorie 30 (Fig. 2b) erklärt. Die Anzeigefläche 22 umfasst die Statusleiste 24, den Anzeigebereich 26 und optional oder zusätzlich eine Kontrollleiste 28. Im Beispiel sind in der Statusleiste 24 verschiedene Inhaltskategorien 30 dargestellt. Ein Pfeil markiert die ununterbrochen berührende Bewegung 21 von einem Anfangspunkt 23 zu einem Endpunkt 25. In Fig. 2a ist bereits ein einzelner Inhalt mit der Bezeichnung "Inhalt 1" im gesamten Anzeigebereich 26 dargestellt. Durch Setzen des Anfangspunktes 23 wählt der Benutzer eine Inhaltskategorie 30 am Ort des Anfangspunktes 23 aus. Durch "Ziehen" zu dem Endpunkt 25 kann der neue Inhalt "Inhalt 2" zusätzlich zu "Inhalt 1" im Anzeigebereich 26 dargestellt werden. Hierzu kann, wie in Fig. 2b gezeigt, der Anzeigebereich 26 in zwei Teilbereiche 26a, 26b geteilt werden, die jeweils einen von beiden Inhalten darstellen. Im dargestellten Beispiel liegt der Endpunkt 25 in der linken Hälfte des Anzeigebereichs und in dem Teilbereich, in dem der Inhalt der ausgewählten Inhaltskategorie angezeigt wird.

Allgemein ausgedrückt, in Ausführungsbeispielen kann der Prozessor 10 das Video- oder Steuersignal 18, 18a basierend auf dem Auswahlsignal 16 erzeugen, sodass der Inhalt einer an dem Ort des Anfangspunktes 23 auswählbar angezeigten Inhaltskategorie 30 in zumindest einem den Endpunkt 25 umfassenden Teilbereich 26a, 26b des Anzeigebereichs mit im Vergleich zu dem in der Statusleiste 24a angezeigten Informationsgehalt erweiterten Informationsgehalt durch die Anzeigeeinrichtung 20 wiedergebbar ist. Mit anderen Worten, ein ausgewählter Inhalt kann in einem Teilbereich 26a, 26b so wiedergegeben werden, dass der Teilbereich den Endpunkt 25 enthält. Dadurch liegen auch der Endpunkt 25 und der Teilbereich 26a, 26b zumindest teilweise in derselben Hälfte des Anzeigebereichs. Im Beispiel von Fig. 2a und 2b beträgt die Größe des den "Inhalt 2" darstellenden Teilbereichs 26a ein Drittel des gesamten Anzeigebereichs. Der Teilbereich 26a kann jedoch alternativ auch größer oder kleiner sein. beispielsweise kann der Teilbereich 26a auch zwei Drittel des Anzeigebereichs umfassen.

Alternativ kann der Prozessor 10 das Video- oder Steuersignal 18 basierend auf dem Auswahlsignal 16 erzeugen, sodass der Endpunkt 25 außerhalb des den Inhalt wiedergebenden Teilbereichs 26a, 26b liegt. Mit anderen Worten, der Endpunkt 25 und der den Inhalt wiedergebende Teilbereich 26a, 26b liegen in derselben Hälfte des Anzeigebereichs, überlappen sich aber nicht gegenseitig. Dies kann z. B. der Fall sein, wenn der den Inhalt wiedergebende Teilbereich 26a, 26b weniger als die Hälfte des Anzeigebereichs umfasst. Da die Position des dargestellten Inhalts davon abhängt, ob der Endpunkt 25 auf der rechten oder linken, oberen oder unteren Hälfte liegt, wird die Bedienung sehr intuitiv. Der Benutzer kann gewissermaßen den Inhalt auf die Seite ziehen, auf der er dargestellt werden soll.

In einigen Ausführungsbeispielen erzeugt der Prozessor das Video- oder Steuersignal 18 so, dass zusätzlich zu dem Inhalt einer an dem Ort des Anfangspunktes 23 auswählbar angezeigten Inhaltskategorie 30 ein Inhalt zumindest einer weiteren Inhaltskategorie 30 in mindestens einem weiteren Teilbereich 26a, 26b des Anzeigebereichs durch die Anzeigeeinrichtung 20 wiedergebbar ist oder wiedergegeben wird. Anders ausgedrückt, wenn bereits ein Inhalt in einem Teilbereich 26a, 26b dargestellt ist, kann gleichzeitig noch ein weiterer Inhalt einer anderen Inhaltskategorie 30 in einem weiteren Teilbereich 26a, 26b dargestellt werden. Ein Benutzer hat somit beispielsweise die Möglichkeit, zu einer eben ausgewählten Inhaltskategorie 30 zusätzlich noch eine zuvor ausgewählte Inhaltskategorie 30 darzustellen. Beispielsweise kann zusätzlich zu einem bereits dargestellten Routenverlauf auch eine Tankanzeige oder ein empfangener Radiosender angezeigt werden.

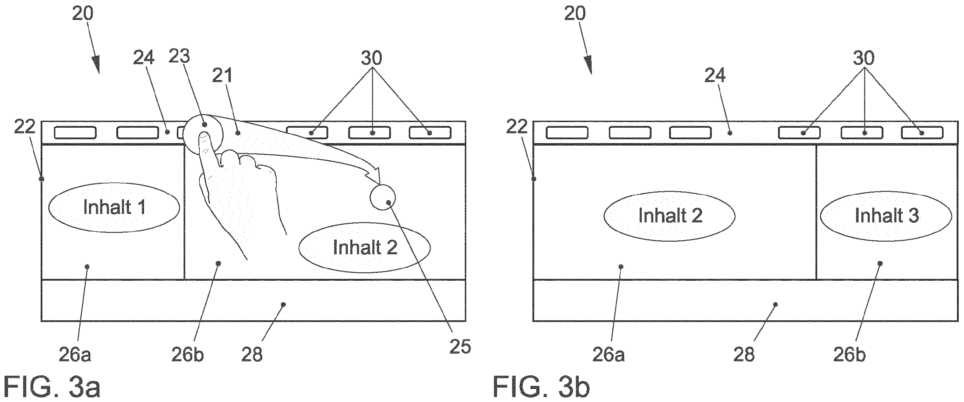

In einigen Ausführungsbeispielen liegt der Endpunkt 25 innerhalb eines bereits Inhalte einer Inhaltskategorie 30 aufweisenden Teilbereichs 26a, 26b des Anzeigebereichs. Der Prozessor 10 erzeugt dabei basierend auf dem Auswahlsignal 16 das Video- oder Steuersignal 18, 18a so, dass der bereits vorhandene Inhalt in dem den Endpunkt 25 umfassenden Teilbereich 26a, 26b in einem anderen Teilbereich 26a, 26b verschoben durch die Anzeigeeinrichtung 20 wiedergegeben wird. Mit anderen Worten, der Anzeigebereich weist vor Empfang der Information des Endpunktes 25 zumindest zwei Teilbereiche 26a, 26b auf, in dem bereits Inhalte dargestellt werden. Fig. 3a zeigt beispielhaft eine solche Konfiguration, bei der ein Inhalt "Inhalt 1" in einem kleineren Teilbereich 26a und ein Inhalt "Inhalt 2" in einem größeren Teilbereich 26b dargestellt wird. Zieht nun ein Benutzer einen Inhalt "Inhalt 3" einer Inhaltskategorie 30 zu einem Endpunkt 25, welcher sich innerhalb des "Inhalt 2" darstellenden Teilbereichs 26b befindet, wird der neue Inhalt "Inhalt 3" in einem Teilbereich 26b dargestellt, welcher zumindest teilweise in der Hälfte des Anzeigebereichs liegt, die den Endpunkt 25 umfasst. Dann kann beispielsweise "Inhalt 1" verschwinden und "Inhalt 2" weiterhin dargestellt werden. Allerdings wird der dem "Inhalt 2" zugeordnete Teilbereich 26a in die Hälfte des Anzeigebereichs verschoben, welche den Endpunkt 25 nicht enthält. "Inhalt 2" in dem den Endpunkt 25 umfassenden Teilbereich, wird somit zumindest teilweise in dem Teilbereich dargestellt, welcher zuvor "Inhalt 1" dargestellt hat. Die Position des darzustellenden Inhalts kann davon abhängen, auf welcher Seite des Anzeigebereichs 22 sich der Endpunkt 25 befindet. Fig. 3b zeigt eine Darstellung eines neu ausgewählten Inhalts "Inhalt 3", zusammen mit einem bereits vorhandenen Inhalt "Inhalt 2". Im Beispiel sind zwei Teilbereiche mit einem Größenverhältnis von 1/3 : 2/3 dargestellt, es können jedoch auch mehr als zwei Teilbereiche oder Teilbereiche in einem anderen Größenverhältnis vorhanden sein (z.B. 2/5 : 3/5 oder 1/4 : 1/4 : ½).

In manchen Ausführungsbeispielen kann das Auswahlsignal 16 zusätzlich, alternativ oder optional Informationen über einen innerhalb eines die Statusleiste umfassenden Randbereichs liegenden Anfangspunkt und einen im Vergleich zu dem Anfangspunkt näher an dem Rand der Anzeigefläche liegenden Endpunkt einer ununterbrochen berührenden Bewegung oder zusätzliche Informationen über einen innerhalb eines keiner Informationskategorie zugeordneten Bereichs der Statusleiste liegenden Berührungspunkt aufweisen. Der Randbereich erstreckt sich dabei von einem die Statusleiste begrenzenden Rand der Anzeigefläche bis zu einem Abstand, der der zweifachen Breite (oder z.B. der dreifachen oder der 1,5-fachen Breite) der Statusleiste entspricht. In anderen Worten, das Auswahlsignal 16 kann Informationen innerhalb eines dem Rand der Anzeigeeinrichtung 20 gegenüberliegenden, sich maximal um eine Breite der Statusleiste 24 von deren Rand erstreckenden Randbereichs der Statusleiste 24 liegenden Anfangspunkt 23 und einen im Vergleich zu dem Anfangspunkt 23 näher an dem Rand der Anzeigeeinrichtung 20 liegenden Endpunkt 25 einer ununterbrochen berührenden Bewegung 21 oder Information über einen innerhalb eines keine Informationskategorie zugeordneten Bereichs der Statusleiste 24 liegenden Berührungspunkt aufweisen. Der Prozessor 10 kann dann basierend auf der erfassten Berührung ein Ausblenden der Statusleiste 24 veranlassen. Mit anderen Worten, ein Benutzer kann die Statusleiste 24 ausblenden lassen, was durch mehrere mögliche Eingaben geschehen kann.

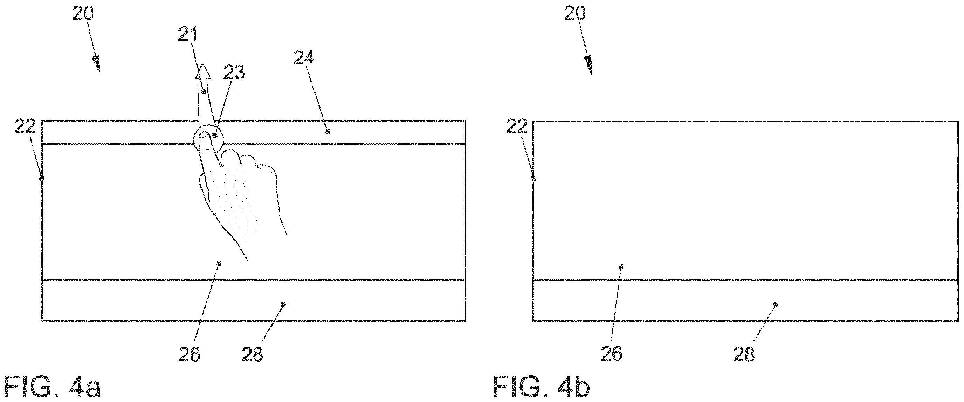

Die Statusleiste 24 befindet sich am oberen Rand des Anzeigebereichs 22, wie in Fig. 4a dargestellt. Entsprechend kann ein Benutzer den Anfangspunkt 23 einer berührenden Bewegung 21 knapp unterhalb der Statusleiste ansetzen, und die berührende Bewegung nach oben gerichtet ausführen. Eine weitere Möglichkeit ist, dass ein Benutzer die Statusleiste 24 ohne anschließende Bewegung berührt, und die Berührung dabei in einem "leeren" Bereich der Statusleiste 24 erfolgt, dem keine Informationskategorie 30 zugeordnet ist. Die Ausblendung der Statusleiste 24 ermöglicht ein übersichtlicheres Darstellen von Inhalten, da auf diese Weise mehr Platz auf der Anzeigefläche 22 zur Verfügung steht. Im Beispiel erstreckt sich der Randbereich bis maximal über eine Breite der Statusleiste 24 über deren Rand hinaus. Alternativ kann dieser Randbereich jedoch auch kleiner sein, beispielsweise die halbe Breite der Statusleiste 24. Der in Fig. 4a und 4b beschriebene Ablauf kann jedoch mehrmals hintereinander, und auf mehrere unterschiedliche Methoden ausgeführt werden. Eine entsprechende Information kann in dem Auswahlsignal 16 demnach zeitlich versetzt, bzw. zu einem späteren Zeitpunkt, abermals erzeugt werden, und zwar auf jeweils unterschiedliche Methoden, sodass das Auswahlsignal 16 beispielsweise sowohl die genannten Informationen über einen Anfangspunkt 23 einer berührenden Bewegung 21 und die berührende Bewegung 21 selbst, als auch über einen Berührungspunkt aufweisen kann.

Zusätzlich kann das Auswahlsignal 16 in manchen Ausführungsbeispielen Information über einen maximal um eine Breite der Statusleiste 24 von dem Rand der Anzeigeeinrichtung 20 entfernten Anfangspunkt 23 und einem im Vergleich zu dem Anfangspunkt 23 von dem Rand der Anzeigeeinrichtung 20 weiter entfernt liegenden Endpunkt 25 einer ununterbrochen berührenden Bewegung 21 aufweisen, Information über einen maximal um die Breite der Statusleiste 24 von dem Rand der Anzeigeeinrichtung 20 entfernt liegenden Berührungspunkt aufweisen oder Information über eine Annäherung eines Benutzers an die Anzeigeeinrichtung 20 aufweisen. Der Prozessor 10 kann daraufhin ein Einblenden der Statusleiste 24 auf der Anzeigefläche 22 der Anzeigeeinrichtung 20 veranlassen.

Fig. 4b zeigt ein Beispiel für einen Zustand der Anzeigeeinrichtung 20 mit ausgeblendeter Statusleiste 24. Dem Benutzer stehen wiederum mehrere Möglichkeiten zur Verfügung, um die Statusleiste 24 wieder einzublenden. Der Benutzer kann beispielsweise die Anzeigefläche in dem Bereich berühren, in dem zuvor die Statusleiste 24 gelegen hat, und im Falle einer am oberen Rand der Anzeigeeinrichtung 20 angeordneten Statusleiste 24, eine Ziehbewegung nach unten ausführen. Auch besteht die Möglichkeit, die Anzeigeeinrichtung 20 in dem Bereich anzutippen, indem sich zuvor die Statusleiste 24 befunden hat. Eine weitere Möglichkeit wäre, dass die Anzeigeeinrichtung 20 bereits auf eine Annäherung des Benutzers durch sofortiges Einblenden der Statusleiste 24 reagiert. Dazu kann beispielsweise ein Annäherungssensor eine Annäherung (z.B. unterschreiten eines vordefinierten, festgelegten Abstands) an die Anzeigeeinrichtung detektieren oder erkennen und ein entsprechendes Signal dem Prozessor übermitteln. Im letzteren Fall wäre eine übersichtliche Darstellung von Inhalten möglich, zusätzlich wäre jedoch ein sofortiger Zugriff auf die Statusleiste 24 ohne weitere Berührung möglich. Alle Möglichkeiten ermöglichen jedoch einem sofortigen Zugriff auf die Statusleiste 24. Dadurch wird der Zeitaufwand für die Bedienung kurzgehalten.

In manchen Ausführungsbeispielen weist das Auswahlsignal 16 Informationen über einen innerhalb eines von mehreren jeweils einen Inhalt, eine unterschiedlichen Informationskategorie wiedergebenden Teilbereichen 26a, 26b liegenden Anfangspunkt 23 und einen innerhalb eines anderen der mehreren jeweils einen Inhalt eine unterschiedlichen Informationskategorie 30 wiedergebenden Teilbereiche 26a, 26b liegenden Endpunkt 25 einer ununterbrochen berührenden Bewegung 21 auf. Ferner kann der Prozessor 10 basierend auf dem Auswahlsignal 16 veranlassen, dass der den Anfangspunkt 23 umfassende Teilbereich 26a, 26b zu dem Endpunkt 25 verschoben durch die Anzeigeeinrichtung 20 wiedergegeben wird und der den Endpunkt 25 umfassende Teilbereich 26a, 26b in Richtung Anfangspunkt 23 verschoben durch die Anzeigeeinrichtung 20 wiedergegeben wird.

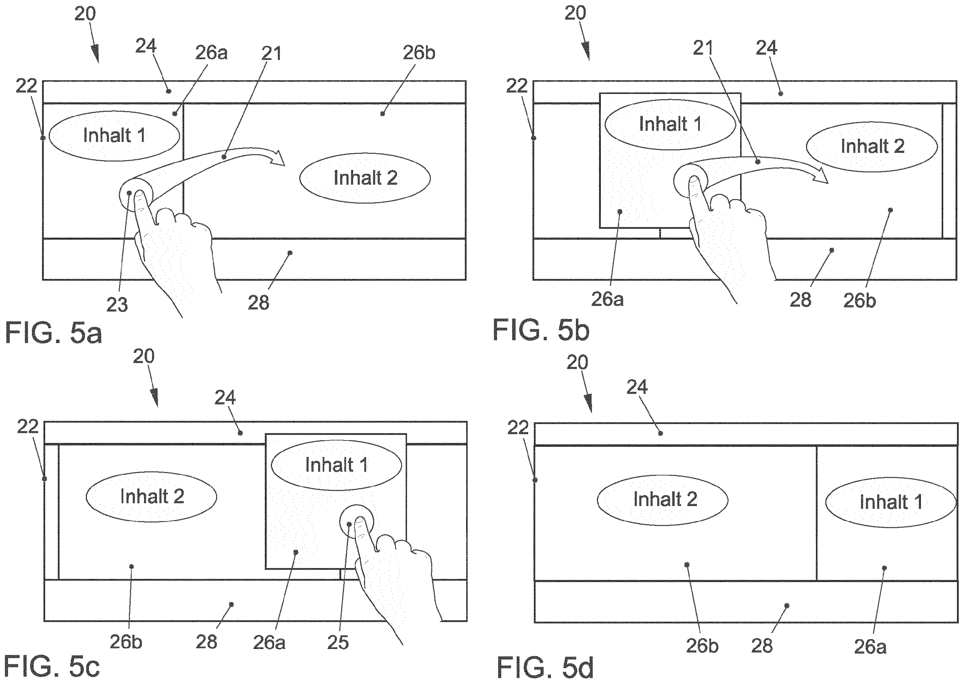

Mit anderen Worten, zwei Teilbereiche 26a, 26b, die jeweils einen Inhalt wiedergeben, können durch eine entsprechende Ziehbewegung miteinander vertauscht werden. Fig. 5a bis 5d zeigen jeweils Ausführungsbeispiele der einzelnen Schritte einer solchen Vertauschung zweier Teilbereiche. Im Beispiel wählt ein Benutzer durch eine Berührung den Teilbereich 26a aus. Der Anfangspunkt 23 der berührenden Bewegung 21 liegt somit im Teilbereich 26a (Fig. 5a). Vollführt der Benutzer nun eine Ziehbewegung, z. B. mit seinem Finger, wird der entsprechende Teilbereich 26a z. B. nach rechts gezogen (Fig. 5b). Hat der Benutzer mit seiner Ziehbewegung den Endpunkt 25 erreicht, an dem er den im Teilbereich 26a dargestellten Inhalt "Inhalt 1" dargestellt haben möchte, kann er die Ziehbewegung dort beenden, und den Teilbereich 26a an dieser Stelle "fallenlassen" (Fig. 5c). Der Teilbereich 26b, in dem sich der Endpunkt 25 befindet, wird nun zum Anfangspunkt 23 hin verschoben, sodass er dann zumindest teilweise den Platz einnimmt, den zuvor der andere Teilbereich 26a eingenommen hat. Im Beispiel wird ein Teilbereich 26a von links nach rechts und demzufolge ein zweiter Teilbereich 26b von rechts nach links verschoben. Alternativ jedoch könnten zwei Teilbereiche 26a, 26b auch übereinander angeordnet sein, was eine Vertauschung des oberen Teilbereichs mit dem unteren erlauben würde.

Optional, zusätzlich oder alternativ kann die Berührung und die Bewegung auf mehrere unterschiedliche Arten realisiert werden. Ein Beispiel wäre ein einfaches Berühren des betreffenden Teilbereichs 26a, 26b mit einem Finger und anschließendes Ziehen. Eine weitere Möglichkeit wäre die Ausführung derselben Berührung und Bewegung mit zwei Fingern. Das System kann z.B. die Berührung des selben Teilbereichs mit zwei Fingern erkennen und entsprechend den Anfang einer Verschiebeaktion wahrnehmen. Ein weiteres Beispiel ist, dass zunächst eine länger andauernde Berührung des Teilbereichs 26a, 26b (z.B. für länger als eine vordefinierte Zeit), beispielsweise für eine Dauer von zwei Sekunden, erfolgt, wodurch der Teilbereich 26a, 26b zur Verschiebung aktiviert wird, und anschließend die Ziehbewegung zum Vertauschen zweier Teilbereiche 26a, 26b erfolgt. Neben diesen beispielhaften Methoden wären allerdings auch andere Methoden denkbar (z. B. Doppelklick und anschließendes Ziehen). Durch das Verschieben von Teilbereichen 26a, 26b innerhalb des Anzeigebereichs 22 hat ein Benutzer die Möglichkeit, bestimmte Inhalte an dem für ihn individuell bevorzugten Ort anzeigen zu lassen und so die gewünschten oder notwendigen Inhalte schneller zu finden.

In einigen Ausführungsbeispielen weist das Auswahlsignal 16 Information über einen innerhalb eines einen Inhalt einer Inhaltskategorie 30 wiedergebenden Teilbereichs 26a, 26b liegenden Anfangspunkt 23 und einen dem von einem Benutzer aus gesehen rechten oder linken Rand der Anzeigefläche 22 der Anzeigeeinrichtung 20 näher als ein vordefinierter Abstand liegenden Endpunkt 25 einer ununterbrochen berührenden Bewegung 21 auf. Daraufhin kann der Prozessor 10 eine Wiedergabe des Inhaltes des den Anfangspunkt 23 aufweisenden Teilbereichs 26a, 26b auf einer weiteren, zusätzlichen Anzeigeeinrichtung 60 veranlassen.

Mit anderen Worten, der Benutzer hat die Möglichkeit, durch eine Ziehbewegung einen bestimmten Inhalt von der Anzeigefläche 22 zur Wiedergabe auf ein weiteres Anzeigegerät 60 zu befördern. Das weitere Anzeigegerät 60 kann z. B. ein hinter dem Lenkrad befindliches Kombiinstrument, aber auch ein mobiles Gerät, wie z. B. ein Laptop, Smartphone oder Tablet sein. Intuitiv kann die Ziehbewegung in die Richtung, in der sich das zusätzliche Anzeigegerät 60 befindet, erfolgen. Der vordefinierte Abstand zum Rand der Anzeigefläche 22 kann beispielsweise eine Fingerbreite oder einen Zentimeter (oder z.B. 0,5 cm oder 2 cm) betragen. Berührung und Bewegung können dabei, wie auch bei der Vertauschung zweier Teilbereiche 26a, 26b, auf mehrere unterschiedliche Arten realisiert werden (z. B. kurze Berührung mit einem Finger und anschließendes Ziehen, kurze Berührung mit zwei Fingern und anschließendes Ziehen, längere Berührung mit einem Finger und anschließendes Ziehen oder Doppelklick und anschließendes Ziehen).

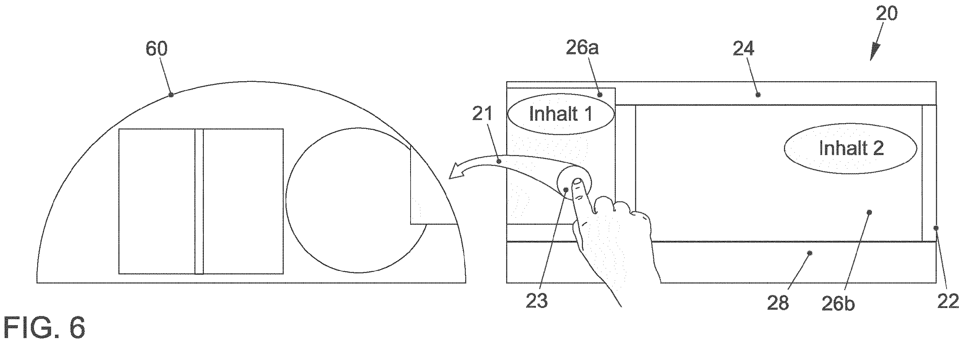

Fig. 6 zeigt ein Beispiel für die Verschiebung eines Inhaltes "Inhalt 1" von der Anzeigefläche 22 einer Anzeigeeinrichtung 20 auf ein zusätzliches Anzeigegerät 60. Dieses ist in dem Beispiel als Kombiinstrument realisiert, welches links von der Anzeigeeinrichtung 20 angeordnet ist. Durch Setzen des Anfangspunkts 23 in dem zu verschiebenden Teilbereich 26a wird "Inhalt 1" ausgewählt und durch eine berührende Bewegung 21 in Richtung Rand gezogen. Endet die Bewegung im vordefinierten Abstand zum Rand der Anzeigefläche 22, wird daraufhin "Inhalt 1" auf dem Kombiinstrument 60 dargestellt. Diese Funktion ist beispielsweise sehr nützlich, wenn ein Fahrer eines Fahrzeugs als Benutzer eine wichtige Information ständig im Auge behalten möchte, wie beispielsweise eine Navigationskarte oder eine Tankstandanzeige. Der Fahrer besitzt dadurch die Möglichkeit, einen Inhalt beispielsweise auf einem Kombiinstrument wiedergeben zu lassen, welches zentraler in seinem Blickfeld liegt.

Das Auswahlsignal 16 kann in Ausführungsbeispielen zusätzlich oder alternativ Informationen über einen innerhalb eines einen Inhalt einer Inhaltskategorie 30 wiedergebenden Teilbereichs 26a, 26b liegenden Anfangspunkt 23 und einen innerhalb eines Bereichs der Statusleiste 24 liegenden Endpunkt 25 einer ununterbrochen berührenden Bewegung 21 aufweisen. Daraufhin kann der Prozessor 10 dann basierend auf dem Auswahlsignal 16 eine Wiedergabe des Inhalts mit im Vergleich zu dem in dem Teilbereich 26a, 26b angezeigten Informationsgehalt verminderten Informationsgehalt (z.B. als Symbol oder Stichwort) in der Statusleiste 24 durch die Anzeigeeinrichtung wiedergegeben werden.

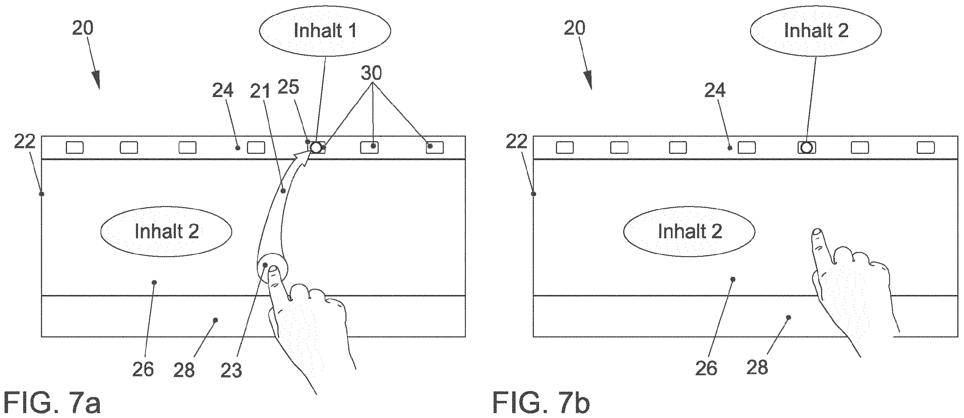

Mit anderen Worten, die Statusleiste 24 kann individuell bestückt werden, indem ein angezeigter Inhalt von einem Teilbereich 26a, 26b des Anzeigebereichs 22 in die Statusleiste hineingezogen wird. Fig. 7a zeigt ein Beispiel für eine Darstellung, in der "Inhalt 2" in einem Teilbereich 26 des Anzeigebereichs 22 dargestellt wird. Ein Benutzer vollführt nun eine berührende Bewegung 21, deren Anfangspunkt 23 innerhalb des Teilbereichs 26 liegt, und deren Endpunkt 25 innerhalb der Statusleiste 24 liegt, und gleichzeitig eine Inhaltskategorie mit "Inhalt 1" zugeordnet ist. Wie in Fig. 7b gezeigt, wird "Inhalt 2" nun in der Statusleiste 24 anstelle von "Inhalt 1" angezeigt. Dadurch hat der Benutzer die Möglichkeit, die Statusleiste 24 individuell zu konfigurieren, indem er beispielsweise dieselbe mit Inhalten bestückt, die vom Benutzer besonders oft genutzt werden. Wichtige oder beliebte Inhalte können dem Benutzer so sehr schnell zugänglich gemacht werden.

Alternativ, optional oder zusätzlich weist das Auswahlsignal 16 Informationen über einen innerhalb einer an einem Rand der Anzeigefläche 22 der Anzeigeeinrichtung 20 wiedergegebenen Kontrollleiste 28 liegenden Berührungspunkt auf. Der Prozessor 10 kann basierend auf dem Auswahlsignal 16 die Steuerung einer Funktionalität 29 veranlassen, die durch den Inhalt der Inhaltskategorie 30 dargestellt wird.

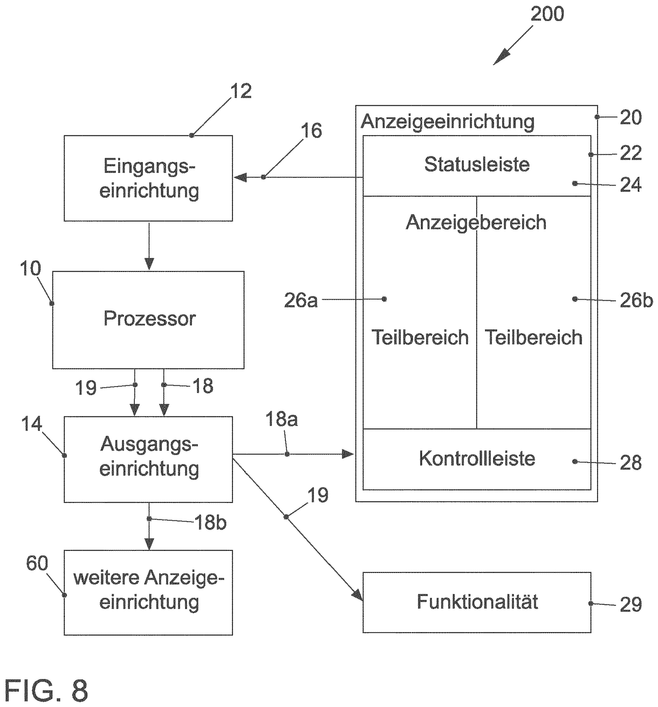

Fig. 8 zeigt ein Blockdiagramm eines Informationswiedergabesystems 200 gemäß einem Ausführungsbeispiel. Das Informationswiedergabesystem 200 basiert auf dem zuvor beschriebenen Konzept und den optionalen, alternativen oder zusätzlichen Aspekten, die in Zusammenhang mit einem oder mehreren Ausführungsbeispielen beschrieben wurden. Auf der Anzeigeeinrichtung 20 sind die Anzeigefläche 22, die Statusleiste 24, Teilbereiche 26a, 26b des Anzeigebereichs 22 und eine Kontrollleiste 28 wiedergegeben.

Der Prozessor 10 realisiert eine Wiedergabe der Statusleiste 24 an dem vom Benutzer aus gesehen oberen Rand der Anzeigefläche 22 der Anzeigeeinrichtung 20 durch die Anzeigeeinrichtung 20. Eine Darstellung der Statusleiste 24 am oberen Rand des Anzeigebereichs 22 kann eine intuitiv einfach Art der Darstellung und eine hohe Benutzerfreundlichkeit bieten. Diese Darstellung ist beispielhaft auch in Fig. 2 bis 8 gezeigt.

Optional kann das Informationswiedergabesystem 15 eine Anzeigeeinrichtung 20 zur Wiedergabe von Inhalten basierend auf einem von dem Prozessor 10 erzeugten Video- oder Steuersignal 18 und eine weitere Anzeigeeinrichtung 60 zur Wiedergabe von Inhalten basierend auf einem von dem Prozessor 10 erzeugten Video- oder Steuersignal 18 aufweisen. Es kann, mit anderen Worten, eine Vielzahl an Geräten zur Kommunikation mit dem Prozessor 10 in Frage kommen. So kann beispielsweise ein Kombiinstrument auch ein InfotainmentSystem oder von einem solchen umfasst sein. Beispiele für eine zusätzliche Anzeigeeinrichtung 60 wurden bereits genannt. Sowohl die Anzeigeeinrichtung 20 als auch eine weitere Anzeigeeinrichtung 60 können fest im Fahrzeug installiert sein.

Einige Ausführungsbeispiele beziehen sich ferner auf ein Fahrzeug mit einem festinstallierten Informationswiedergabesystem nach dem beschriebenen Konzept oder nach einem der Ausführungsbeispiele. Dies kann ein Landfahrzeug (z. B. PKW oder LKW) sein, Realisierungsmöglichkeiten bestehen jedoch auch in Wasser- oder Luftfahrzeugen.

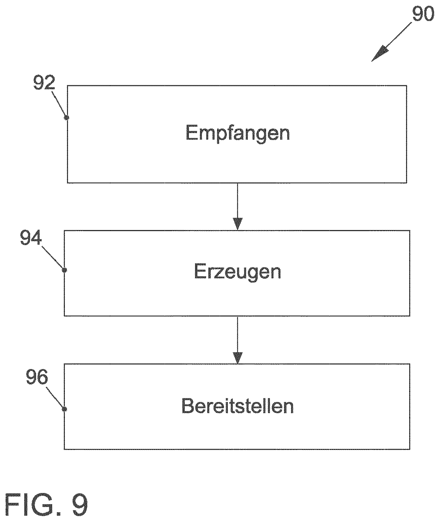

Fig. 9 zeigt ein Flussdiagram eines Verfahrens 90 zum Bereitstellen von Informationen für den Benutzer eines Fahrzeugs gemäß einem Ausführungsbeispiel. Das Verfahren 90 umfasst ein Empfangen 92 eines Auswahlsignals 16. Auch umfasst das Verfahren 90 ein Erzeugen 94 eines Video- oder Steuersignals 18, 18a, sodass eine an einem Rand einer berührungsempfindlichen Anzeigefläche 22 einer Anzeigeeinrichtung 20 angeordnete Statusleiste 24 und ein an die Statusleiste 24 angrenzender Anzeigebereich basierend auf dem Video- oder Steuersignal 18, 18a durch die Anzeigeeinrichtung 20 auf der Anzeigefläche 22 wiedergebbar sind. Dabei weist das Auswahlsignal 16 Informationen über einen Anfangspunkt 23 und einen Endpunkt 25 einer die Anzeigefläche 22 der Anzeigeeinrichtung 20 ununterbrochen berührenden Bewegung 21 durch einen Benutzer auf. Der Anfangspunkt 23 liegt hierbei in dem Bereich der Statusleiste 24 und der End-punkt 25 liegt in dem Anzeigebereich. Weiterhin erfolgt das Erzeugen 94 des Video- oder Steuersignal 18, 18a basierend auf dem Auswahlsignal 16, sodass ein Inhalt einer an dem Ort des Anfangspunktes 23 auswählbar angezeigten Inhaltskategorie 30 in zumindest einem zumindest teilweise in einer den Endpunkt 25 umfassenden Hälfte des Anzeigebereichs gelegenen Teilbereich 26a, 26b des Anzeigebereichs mit im Vergleich zu dem in der Statusleiste 24 angezeigten Informationsgehalt erweiterten Informationsgehalt durch die Anzeigeeinrichtung 20 wiedergebbar ist. Schließlich umfasst das Verfahren 90 ein Bereitstellen 96 des Video- oder Steuersignals 18, 18a an einer Anzeigeeinrichtung 20.

Das Verfahren 90 kann weitere optionale, zusätzliche oder alternative Verfahrensschritte umfassen, die optionalen, zusätzlichen oder alternativen Ausgestaltungen entsprechen, die im Zusammenhang mit dem zuvor beschriebenen Konzept oder zuvor beschriebenen Ausführungsbeispielen erläutert wurden.

In einigen Ausführungsbeispielen wird eine Statusanzeige von Information im Fahrzeug als interaktive Leiste z.B. am oberen Bildschirmrand realisiert. Auch sind die zu den Statusinformationen zugehörigen Einstellungen und Bedienfelder ohne Umwege, etwa über ein Hauptmenü zu erreichen.

Einige Ausführungsbeispiele beziehen sich auf das Ziehen und Fallenlassen (engl. Drag-and-Drop) von Bedienelementen auf Touchscreens in Verbindung mit 2-Finger-Gesten und einem individuell bestückbaren Hauptmenü oder eine interaktive Drag-and-Drop-Statusleiste im Infotainmentsystem. Es wird hierzu im oberen Bildschirmbereich des Infotainmentsystems des Fahrzeugs ein Bereich reserviert, in dem der aktuelle Status des Infotainmentsystems und des Fahrzeugs angezeigt wird (z.B. "Lenkradheizung aktiviert": Icon Lenkradheizung wird eingeblendet; "Lenkradheizung deaktiviert": Icon wird ausgeblendet). Dadurch kann eine rein statische Anzeige zu einem interaktiven Element erweitert werden. Das heißt, der Nutzer hat die Möglichkeit, die Status-Icons (derzeit aktivierte Funktionen), die in der Statuszeile angezeigt werden, per Drag and Drop in den Bereich unterhalb der Statuszeile zu verschieben, dort "fallenzulassen" und dort zur Anzeige zu bringen, um diese dann auch bedienen zu können. Das Konzept kann auch mit einem Splitscreen-Konzept (aufgeteilter Bildschirm) kombiniert werden. Durch Drag and Drop aus der Statuszeile kann der Nutzer direkt auf die zur Statusinformation zugehörigen Inhalte und Einstellungen zugreifen. Er ein Umweg zu diesen Einstellungen über ein Hauptmenü kann vermieden werden. Es kann direkt durch Drag and Drop auf die entsprechende Funktionalität zugreifen werden. Zudem können die Statusanzeigen mit Drag and Drop durch Funktionen individuell erweitert werden.

Die Statuszeile im Infotainmentsystem kann also um eine interaktive Drag and Drop Funktion erweitert werden. Somit hat der Nutzer die Möglichkeit, eine Funktion schnell zur Anzeige zu bringen und zu konfigurieren, ohne sich dabei durch die jeweiligen Menüs klicken zu müssen. Nach der Drag-and-Drop-Aktion kann eine Auswertung erfolgen in welcher Hälfte des Infotainmentsystems das Icon der Funktion losgelassen wurde und dementsprechend kann auf der linken oder rechten Seite ein Splitscreenfenster eingeblendet werden, in dem die Funktion bedient werden kann. Es kann der Status mit einer Verknüpfung versehen werden. Zudem können diese Informationen individuell durch Funktionen und/oder Shortcuts erweiterbar sein.

In einigen Ausführungsbeispielen lassen sich Elemente aus der Statusleiste herausziehen, um in den neuen Kontext zu wechseln, was auf unterschiedliche Arten geschehen kann. Bei einer anfänglichen Vollbildschirm-Anzeige erscheint der neue Kontext z. B. in einem 1/3-Splitscreen, dessen Position davon abhängig ist, zu welcher Seite gezogen wird. Bei einer bisherigen Splitscreen-Anzeige gibt es wiederum mehrere Varianten. Bei einer Variante verschwindet der vorherige 1/3-Splitscreen und der vorherige 2/3-Splitscreen bleibt bestehen, wobei die neue Position des 2/3-Splitscreens von der Position des neuen 1/3-Splitscreens abhängt. In einer anderen Variante wechselt der Splitscreen, auf den gezogen wird, in den neuen Kontext.

In manchen Ausführungsbeispielen ist die Statusleiste durch Wischen nach oben oder kurzes Berühren oder Antippen (Tap) auf den freien Bereich ausblendbar. Das Einblenden geschieht durch Wischen nach unten oder durch Tap auf die ursprüngliche Position.

Einige Ausführungsbeispiele beschreiben die Statusleiste zusätzlich als auflösbares und individuell bestückbares Menü. Dieses fungiert als Abkürzungs- (Shortcut-) Menü z. B. am oberen Bildschirmrand analog zur Kontrollleiste (Control Bar) am unteren Bildschirmrand. Die Anzeige der Statusleiste reagiert z.B. auf Annäherung eines Benutzers analog zur Anzeige des Control Bar. Menüpunkte lassen sich per Drag and Drop neu anordnen und befüllen.

In manchen Ausführungsbeispielen können durch Drag and Drop die Positionen der Splitscreens getauscht werden. Der Vorgang des Abdockens und Position Tauschens wird z.B. durch eine Animation analog zum Schieberkonzept im frei programmierbaren Kombiinstrument (FPK) dargestellt. Hierzu existieren mehrere Varianten. Bei einer Variante erfolgt das Ziehen mit einem Finger. Anders kann beim Anzeigen einer Karte vorgegangen werden, da dann die Karte bewegt wird. Bei einer weiteren Variante erfolgt eine längere Berührung (Longpress) mit einem Finger, wobei nach dem Abdocken gezogen wird. Bei noch einer weiteren Variante wird z.B. mit zwei Fingern gezogen. Die beiden letzteren Varianten stellen z.B. versteckte Eigenschaften (Hidden Features) dar, die sich einem Benutzer nutzen kann.

In einigen Ausführungsbeispielen kann z.B. der linke Teilbereich (1/3- oder 2/3-Splitscreen oder auch Vollbildschirm) nach links ins digitale Kombiinstrument geschoben werden. Dies kann unabhängig von einem dezidierten Austauschbutton erfolgen. Die Geste ist z.B. analog zur Geste für den Splitscreen-Tausch (z. B. Longpress/Ein- oder Zwei-Finger-Geste). In einer Variante wird z.B. die Bedienung im digitalen Kombiinstrument fortgesetzt. In einer anderen Variante wird der neue Kontext im Kombiinstrument z.B. immer auf den mittleren Anzeigeplatz gelegt.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hineinschreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Informationswiedergabesystem (15) für ein Fahrzeug, mit folgenden Merkmalen:
einer Anzeigeeinrichtung (20), die ausgebildet ist zur Anzeige eines Video- oder Steuersignals (18, 18a), die Anzeigeeinrichtung umfasst eine berührungsempfindliche Anzeigefläche (22), die ausgebildet ist, um ein Auswahlsignal (16) zu erzeugen;
einer Eingangseinrichtung (12), die ausgelegt ist, um das Auswahlsignal (16) zu empfangen;
einem Prozessor (10), der ausgelegt ist, um das Video- oder Steuersignal zu erzeugen, sodass eine an einem Rand der berührungsempfindlichen Anzeigefläche (22) der Anzeigeeinrichtung (20) angeordnete Statusleiste (24) und ein an die Statusleiste (24) angrenzender Anzeigebereich basierend auf dem Video- oder Steuersignal (18, 18a) durch die Anzeigeeinrichtung (20) auf der berührungsempfindlichen Anzeigefläche (22) wiedergegeben werden,
wobei das Auswahlsignal (16) Informationen über einen Anfangspunkt (23) und einen Endpunkt (25) einer die Anzeigefläche (22) der Anzeigeeinrichtung (20) ununterbrochen berührenden Bewegung (21) durch einen Benutzer aufweist, wobei der Anfangspunkt (23) in dem Bereich der Statusleiste (24) und der Endpunkt (25) in dem Anzeigebereich liegt,
wobei der Prozessor (10) ausgelegt ist, um das Video- oder Steuersignal (18, 18a) basierend auf dem Auswahlsignal (16) zu erzeugen, sodass ein Inhalt einer an dem Ort des Anfangspunktes (23) auswählbar angezeigten Inhaltskategorie (30) in zumindest einem zumindest teilweise in einer den Endpunkt (25) umfassenden Hälfte des Anzeigebereichs gelegenen Teilbereich (26a, 26b) des Anzeigebereichs mit im Vergleich zu dem in der Statusleiste (24) angezeigten Informationsgehalt erweitertem Informationsgehalt durch die Anzeigeeinrichtung (20) wiedergegeben wird;
einem weiteren zusätzlichen Anzeigegerät (60), wobei das Auswahlsignal (16) zusätzliche Informationen über einen innerhalb eines einen Inhalt einer Inhaltskategorie (30) wiedergebenden Teilbereichs (26a, 26b) liegenden weiteren Anfangspunkt (23) und einen dem von einem Benutzer aus gesehen rechten oder linken Rand der Anzeigefläche (22) der Anzeigeeinrichtung (20) näher als ein vordefinierter Abstand liegenden weiteren Endpunkt (25) einer ununterbrochen berührenden Bewegung (21) aufweist, wobei der Prozessor (10) ausgelegt ist, um basierend auf dem Auswahlsignal (16) ein weiteres Video- oder Steuersignal (18b) zu erzeugen, sodass zumindest teilweise der Inhalt des den Anfangspunkt (23) aufweisenden Teilbereichs (26a, 26b) auf dem weiteren zusätzlichen Anzeigegerät (60) wiedergegeben wird; und
einer Ausgangseinrichtung (14), die ausgebildet ist, um das Video- oder Steuersignal (18, 18a) an der Anzeigeeinrichtung (20) bereitzustellen;
wobei der Prozessor (10) ausgelegt ist, um das Video- oder Steuersignal (18, 18a) zu erzeugen, sodass die Statusleiste (24) an dem vom Benutzer aus gesehen oberen Rand der Anzeigefläche (22) der Anzeigeeinrichtung (20) durch die Anzeigeeinrichtung (20) wiedergegeben wird,
wobei zur Ausblendung der Statusleiste (24) die Statusleiste (24) ohne anschließende Bewegung berührt wird, und die Berührung dabei in einem leeren Bereich der Statusleiste (24) erfolgt, dem keine Informationskategorie (30) zugeordnet ist, oder der Anfangspunkt (23) einer berührenden Bewegung (21) knapp unterhalb der Statusleiste ansetzen, und die berührende Bewegung nach oben gerichtet ausgeführt wird.

2. Informationswiedergabesystem (15) gemäß Anspruch 1, wobei der Prozessor (10) ausgelegt ist, um das Video- oder Steuersignal (18, 18a) basierend auf dem Auswahlsignal (16) zu erzeugen, sodass der Inhalt einer an dem Ort des Anfangspunktes (23) auswählbar angezeigten Inhaltskategorie (30) in zumindest einem den Endpunkt (25) umfassenden Teilbereich (26a, 26b) des Anzeigebereichs mit im Vergleich zu dem in der Statusleiste (24) angezeigten Informationsgehalt erweitertem Informationsgehalt durch die Anzeigeeinrichtung (20) wiedergegeben wird.

3. Informationswiedergabesystem (15) gemäß einem der vorangegangenen Ansprüche, wobei der Prozessor (10) ausgelegt ist, um das Video- oder Steuersignal (18, 18a) zu erzeugen, sodass zusätzlich zu dem Inhalt einer an dem Ort des Anfangspunktes (23) auswählbar angezeigten Inhaltskategorie (30) ein Inhalt zumindest einer weiteren Inhaltskategorie (30) in mindestens einem weiteren Teilbereich (26a, 26b) des Anzeigebereichs durch die Anzeigeeinrichtung (20) wiedergegeben wird.

4. Informationswiedergabesystem (15) gemäß einem der vorangegangenen Ansprüche, wobei der Endpunkt (25) innerhalb eines bereits Inhalte einer Inhaltskategorie (30) aufweisenden Teilbereichs (26a, 26b) des Anzeigebereichs liegt, wobei der Prozessor (10) ausgelegt ist, um basierend auf dem Auswahlsignal (16) das Video- oder Steuersignal (18, 18a) zu erzeugen, sodass der bereits vorhandene Inhalt in dem den Endpunkt (25) umfassenden Teilbereich (26a, 26b) in einen anderen Teilbereich (26a, 26b) verschoben durch die Anzeigeeinrichtung (20) wiedergegeben wird.

5. Informationswiedergabesystem (15) gemäß einem der vorangegangenen Ansprüche, wobei das Auswahlsignal (16) zusätzliche Informationen über einen innerhalb eines die Statusleiste (24) umfassenden Randbereichs liegenden Anfangspunkt (23) und einen im Vergleich zu dem Anfangspunkt (23) näher an dem Rand der Anzeigefläche (22) liegenden Endpunkt (25) einer ununterbrochen berührenden Bewegung (21) oder zusätzliche Informationen über einen innerhalb eines keiner Informationskategorie zugeordneten Bereichs der Statusleiste (24) liegenden Berührungspunkt aufweist, wobei sich der Randbereich von einem die Statusleiste (24) begrenzenden Rand der Anzeigefläche (22) bis zu einem Abstand, der der zweifachen Breite der Statusleiste (24) entspricht, erstreckt, wobei der Prozessor (10) ausgelegt ist, um basierend auf dem Auswahlsignal (16), das Video- oder Steuersignal (18, 18a) zu erzeugen, sodass die Statusleiste (24) basierend auf der erfassten Berührung ausgeblendet wird.

6. Informationswiedergabesystem (15) gemäß Anspruch 5, wobei das Auswahlsignal (16) Informationen über einen maximal um eine Breite der Statusleiste (24) von dem Rand der Anzeigeeinrichtung (20) entfernt liegenden Anfangspunkt (23) und einen im Vergleich zu dem Anfangspunkt (23) von dem Rand der Anzeigeeinrichtung (20) weiter entfernt liegenden Endpunkt (25) einer ununterbrochen berührenden Bewegung (21) aufweist, Informationen über einen maximal um die Breite der Statusleiste (24) von dem Rand der Anzeigeeinrichtung (20) entfernt liegenden Berührungspunkt aufweist oder Informationen über eine Annäherung eines Benutzers an die Anzeigeeinrichtung (20) aufweist, wobei der Prozessor (10) ausgelegt ist, um basierend auf dem Auswahlsignal (16) das Video- oder Steuersignal (18, 18a) zu erzeugen, sodass die Statusleiste (24) auf der Anzeigefläche (22) der Anzeigeeinrichtung (20) eingeblendet wird.

7. Informationswiedergabesystem (15) gemäß einem der vorangegangenen Ansprüche, wobei das Auswahlsignal (16) Informationen über einen innerhalb eines von mehreren jeweils einen Inhalt einer unterschiedlichen Informationskategorie wiedergebenden Teilbereichen (26a, 26b) liegenden Anfangspunkt (23) und einen innerhalb eines anderen der mehreren jeweils einen Inhalt einer unterschiedlichen Informationskategorie wiedergebenden Teilbereiche (26a, 26b) liegenden Endpunkt (25) einer ununterbrochen berührenden Bewegung (21) aufweist, wobei der Prozessor (10) ausgelegt ist, um basierend auf einem Auswahlsignal (16) das Video- oder Steuersignal (18, 18a) zu erzeugen, sodass der den Anfangspunkt (23) umfassende Teilbereich (26a, 26b) zu dem Endpunkt (25) verschoben durch die Anzeigeeinrichtung (20) wiedergegeben wird und der den Endpunkt (25) umfassende Teilbereich (26a, 26b) in Richtung Anfangspunkt (23) verschoben durch die Anzeigeeinrichtung (20) wiedergegeben wird.

8. Informationswiedergabesystem (15) gemäß einem der vorangegangenen Ansprüche, wobei das Auswahlsignal (16) zusätzliche Informationen über einen innerhalb eines einen Inhalt einer Inhaltskategorie (30) wiedergebenden Teilbereichs (26a, 26b) liegenden Anfangspunkt (23) und einen innerhalb eines Bereichs der Statusleiste (24), dem gleichzeitig eine weiteren Inhaltskategorie (30) mit einem Inhalt zugeordnet ist, liegenden Endpunkt (25) einer ununterbrochen berührenden Bewegung (21) aufweist, wobei der Prozessor (10) ausgelegt ist, um basierend auf dem Auswahlsignal (16) das Video- oder Steuersignal (18, 18a) zu erzeugen, sodass die Inhaltskategorie mit im Vergleich zu dem in dem Teilbereich (26a, 26b) angezeigten Informationsgehalt vermindertem Informationsgehalt in der Statusleiste (24) anstelle der weiteren Inhaltskategorie (30) mit einem Inhalt durch die Anzeigeeinrichtung (20) wiedergegeben wird.

9. Fahrzeug mit einem Informationswiedergabesystem (15) gemäß einem der vorangegangenen Ansprüche.

10. Verfahren (90) zum Bereitstellen von Informationen für den Benutzer eines Fahrzeugs, mit folgenden Schritten:
Erzeugen eines Auswahlsignals (16) durch eine berührungsempfindliche Anzeigefläche (22) einer Anzeigeeinrichtung (20);
Empfangen (92) des Auswahlsignals (16);
Erzeugen (94) eines Video- oder Steuersignals (18, 18a), sodass eine an einem Rand der berührungsempfindlichen Anzeigefläche (22) der Anzeigeeinrichtung (20) angeordnete Statusleiste (24) und ein an die Statusleiste (24) angrenzender Anzeigebereich basierend auf dem Video- oder Steuersignal (18, 18a) durch die Anzeigeeinrichtung (20) auf der Anzeigefläche (22) wiedergegeben werden,
wobei das Auswahlsignal (16) Informationen über einen Anfangspunkt (23) und einen Endpunkt (25) einer die Anzeigefläche (22) der Anzeigeeinrichtung (20) ununterbrochen berührenden Bewegung (21) durch einen Benutzer aufweist, wobei der Anfangspunkt (23) in dem Bereich der Statusleiste (24) und der Endpunkt (25) in dem Anzeigebereich liegt,
wobei das Video- oder Steuersignal (18, 18a) basierend auf dem Auswahlsignal (16) erzeugt wird, sodass ein Inhalt einer an dem Ort des Anfangspunktes (23) auswählbar angezeigten Inhaltskategorie (30) in zumindest einem zumindest teilweise in einer den Endpunkt (25) umfassenden Hälfte des Anzeigebereichs gelegenen Teilbereich (26a, 26b) des Anzeigebereichs mit im Vergleich zu dem in der Statusleiste (24) angezeigten Informationsgehalt erweitertem Informationsgehalt durch die Anzeigeeinrichtung (20) wiedergegeben wird;
wobei das Auswahlsignal (16) zusätzliche Informationen über einen innerhalb eines einen Inhalt einer Inhaltskategorie (30) wiedergebenden Teilbereichs (26a, 26b) liegenden weiteren Anfangspunkt (23) und einen dem von einem Benutzer aus gesehen rechten oder linken Rand der Anzeigefläche (22) der Anzeigeeinrichtung (20) näher als ein vordefinierter Abstand liegenden weiteren Endpunkt (25) einer ununterbrochen berührenden Bewegung (21) aufweist, wobei der Prozessor (10) ausgelegt ist, um basierend auf dem Auswahlsignal (16) ein weiteres Video- oder Steuersignal (18b) zu erzeugen, sodass zumindest teilweise der Inhalt des den Anfangspunkt (23) aufweisenden Teilbereichs (26a, 26b) auf einem weiteren zusätzlichen Anzeigegerät (60) wiedergegeben wird; und
Bereitstellen (96) des Video- oder Steuersignals (18, 18a) an die Anzeigeeinrichtung (20);
wobei der Prozessor (10) ausgelegt ist, um das Video- oder Steuersignal (18, 18a) zu erzeugen, sodass die Statusleiste (24) an dem vom Benutzer aus gesehen oberen Rand der Anzeigefläche (22) der Anzeigeeinrichtung (20) durch die Anzeigeeinrichtung (20) wiedergegeben wird,
wobei zur Ausblendung der Statusleiste (24) die Statusleiste (24) ohne anschließende Bewegung berührt wird, und die Berührung dabei in einem leeren Bereich der Statusleiste (24) erfolgt, dem keine Informationskategorie (30) zugeordnet ist oder der Anfangspunkt (23) einer berührenden Bewegung (21) knapp unterhalb der Statusleiste ansetzen, und die berührende Bewegung nach oben gerichtet ausgeführt wird.

11. Programm mit einem Programmcode zum Durchführen des Verfahrens gemäß Anspruch 10, wenn der Programmcode auf einem Computer, einem Prozessor oder einer programmierbaren Hardwarekomponente ausgeführt wird.

## Claims

1. Information reproduction system (15) for a vehicle, having the following features:
a display device (20) that is designed to display a video or control signal (18, 18a), the display device comprising a touch-sensitive display area (22) that is designed to produce a selection signal (16);
an input device (12) that is designed to receive the selection signal (16);
a processor (10) that is designed to produce the video or control signal, so that a status bar (24), which is arranged at one edge of the touch-sensitive display area (22) of the display device (20), and a display region that adjoins the status bar (24) are reproduced on the touch-sensitive display area (22) by the display device (20) on the basis of the video or control signal (18, 18a),
wherein the selection signal (16) has information about a start (23) and an end (25) of a movement (21), by a user, that continuously touches the display area (22) of the display device (20), the start (23) being situated in the region of the status bar (24) and the end (25) being situated in the display region,
wherein the processor (10) is designed to produce the video or control signal (18, 18a) on the basis of the selection signal (16), so that a content in a content category (30) that is displayed so as to be selectable at the location of the start (23) is reproduced by the display device (20) in at least one subregion (26a, 26b) of the display region, which subregion is situated at least to some extent in a half of the display region that comprises the end (25), with an information content that is extended in comparison with the information content displayed in the status bar (24);
a further additional display unit (60), wherein the selection signal (16) has additional information about a further start (23), which is situated within a subregion (26a, 26b) that reproduces a content in a content category (30), and a further end (25), which is situated closer than a predefined distance to the right-hand or
left-hand edge of the display area (22) of the display device (20) as seen by a user, of a continuously touching movement (21), the processor (10) being designed to produce a further video or control signal (18b) on the basis of the selection signal (16), so that at least part of the content of the subregion (26a, 26b) having the start (23) is reproduced on the further additional display unit (60); and
an output device (14) that is designed to provide the video or control signal (18, 18a) for the display device (20) ;
wherein the processor (10) is designed to produce the video or control signal (18, 18a), so that the status bar (24) is reproduced by the display device (20) at the upper edge, as seen by the user, of the display area (22) of the display device (20),
wherein, in order to hide the status bar (24), the status bar (24) is touched without subsequent movement, and the touch in this case is made in an empty region of the status bar (24) that has no associated information category (30), or the start (23) of a touching movement (21) begins just beneath the status bar, and the touching movement is performed in an upward direction.

2. Information reproduction system (15) according to Claim 1, wherein the processor (10) is designed to produce the video or control signal (18, 18a) on the basis of the selection signal (16), so that the content in a content category (30) that is displayed so as to be selectable at the location of the start (23) is reproduced by the display device (20) in at least one subregion (26a, 26b) of the display region, which subregion comprises the end (25), with an information content that is extended in comparison with the information content displayed in the status bar (24).

3. Information reproduction system (15) according to either of the preceding claims, wherein the processor (10) is designed to produce the video or control signal (18, 18a), so that in addition to the content in a content category (30) that is displayed so as to be selectable at the location of the start (23), a content in at least one further content category (30) is reproduced by the display device (20) in at least one further subregion (26a, 26b) of the display region.

4. Information reproduction system (15) according to one of the preceding claims, wherein the end (25) is situated within a subregion (26a, 26b) of the display region that already has contents in a content category (30), the processor (10) being designed to produce the video or control signal (18, 18a) on the basis of the selection signal (16), so that the already existent content in the subregion (26a, 26b) that comprises the end (25) is reproduced by the display device (20) in a manner shifted to another subregion (26a, 26b).

5. Information reproduction system (15) according to one of the preceding claims, wherein the selection signal (16) has additional information about a start (23), which is situated within an edge region that comprises the status bar (24), and an end (25), which is situated closer to the edge of the display area (22) in comparison with the start (23), of a continuously touching movement (21) or additional information about a contact point situated within a region of the status bar (24) that is not associated with an information category, wherein the edge region extends from an edge of the display area (22) that bounds the status bar (24) to a distance that corresponds to twice the width of the status bar (24), the processor (10) being designed to produce the video or control signal (18, 18a) on the basis of the selection signal (16), so that the status bar (24) is hidden on the basis of the detected touch.

6. Information reproduction system (15) according to Claim 5, wherein the selection signal (16) has information about a start (23), which is situated no more than a width of the status bar (24) away from the edge of the display device (20), and an end (25), which is situated further away from the edge of the display device (20) in comparison with the start (23), of a continuously touching movement (21), has information about a contact point situated no more than the width of the status bar (24) away from the edge of the display device (20) or has information about an approach by a user to the display device (20), the processor (10) being designed to produce the video or control signal (18, 18a) on the basis of the selection signal (16), so that the status bar (24) is shown on the display area (22) of the display device (20) .

7. Information reproduction system (15) according to one of the preceding claims, wherein the selection signal (16) has information about a start (23), which is situated within one of a plurality of subregions (26a, 26b) that each reproduce a content in a different information category, and an end (25), which is situated within another of the plurality of subregions (26a, 26b) that each reproduce a content in a different information category, of a continuously touching movement (21), the processor (10) being designed to produce the video or control signal (18, 18a) on the basis of a selection signal (16), so that the subregion (26a, 26b) comprising the start (23) is reproduced by the display device (20) in a manner shifted to the end (25) and the subregion (26a, 26b) comprising the end (25) is reproduced by the display device (20) in a manner shifted toward the start (23) .

8. Information reproduction system (15) according to one of the preceding claims, wherein the selection signal (16) has additional information about a start (23), which is situated within a subregion (26a, 26b) that reproduces a content in a content category (30), and an end (25), which is situated within a region of the status bar (24), which at the same time has an associated further content category (30) with a content, of a continuously touching movement (21), the processor (10) being designed to produce the video or control signal (18, 18a) on the basis of the selection signal (16), so that the content category with a reduced information content in comparison with the information content displayed in the subregion (26a, 26b) is reproduced in the status bar (24) by the display device (20) instead of the further content category (30) with a content.

9. Vehicle having an information reproduction system (15) according to one of the preceding claims.

10. Method (90) for providing information for the user of a vehicle, having the following steps:
production of a selection signal (16) by a touch-sensitive display area (22) of a display device (20);
reception (92) of the selection signal (16);
production (94) of a video or control signal (18, 18a), so that a status bar (24), which is arranged at one edge of the touch-sensitive display area (22) of the display device (20), and a display region that adjoins the status bar (24) are reproduced on the display area (22) by the display device (20) on the basis of the video or control signal (18, 18a),
wherein the selection signal (16) has information about a start (23) and an end (25) of a movement (21), by a user, that continuously touches the display area (22) of the display device (20), the start (23) being situated in the region of the status bar (24) and the end (25) being situated in the display region,
wherein the video or control signal (18, 18a) is produced on the basis of the selection signal (16), so that a content in a content category (30) that is displayed so as to be selectable at the location of the start (23) is reproduced by the display device (20) in at least one subregion (26a, 26b) of the display region, which subregion is situated at least to some extent in a half of the display region that comprises the end (25), with an information content that is extended in comparison with the information content displayed in the status bar (24) ;
wherein the selection signal (16) has additional information about a further start (23), which is situated within a subregion (26a, 26b) that reproduces a content in a content category (30), and a further end (25), which is situated closer than a predefined distance to the right-hand or left-hand edge of the display area (22) of the display device (20) as seen by a user, of a continuously touching movement (21), the processor (10) being designed to produce a further video or control signal (18b) on the basis of the selection signal (16), so that at least part of the content of the subregion (26a, 26b) having the start (23) is reproduced on a further additional display unit (60); and
provision (96) of the video or control signal (18, 18a) for the display device (20);
wherein the processor (10) is designed to produce the video or control signal (18, 18a), so that the status bar (24) is reproduced by the display device (20) at the upper edge, as seen by the user, of the display area (22) of the display device (20),
wherein, in order to hide the status bar (24), the status bar (24) is touched without subsequent movement, and the touch in this case is made in an empty region of the status bar (24) that has no associated information category (30), or the start (23) of a touching movement (21) begins just beneath the status bar, and the touching movement is performed in an upward direction.

11. Program having a program code for performing the method according to Claim 10 when the program code is executed on a computer, a processor or a programmable hardware component.

## Revendications

1. Système de reproduction d'informations (15) destiné à un véhicule, ledit système présentant les caractéristiques suivantes :
un dispositif d'affichage (20) qui est conçu pour afficher un signal vidéo ou de commande (18, 18a), le dispositif d'affichage comprenant une surface d'affichage tactile (22) qui est conçue pour générer un signal de sélection (16) ;
un dispositif d'entrée (12) qui est conçu pour recevoir le signal de sélection (16) ;
un processeur (10) qui est conçu pour générer le signal vidéo ou de commande de sorte qu'une barre d'état (24) disposée sur un bord de la surface d'affichage tactile (22) du dispositif d'affichage (20) et une zone d'affichage adjacente à la barre d'état (24) soient reproduites sur la surface d'affichage tactile (22) par le dispositif d'affichage (20) sur la base du signal vidéo ou de commande (18, 18a),
le signal de sélection (16) comportant des informations concernant un point initial (23) et un point final (25) d'un mouvement (21), effectué par un utilisateur, de contact continu de la surface d'affichage (22) du dispositif d'affichage (20), le point initial (23) étant situé dans la zone de la barre d'état (24) et le point final (25) étant situé dans la zone d'affichage,
le processeur (10) étant conçu pour générer le signal vidéo ou de commande (18, 18a) sur la base du signal de sélection (16) de sorte qu'un contenu d'une catégorie de contenu (30) affichée de manière sélectionnable à l'emplacement du point initial (23) est reproduit dans au moins une partie (26a, 26b) de la zone d'affichage, qui est située au moins partiellement dans une moitié de la zone d'affichage qui comprend le point final (25), par le dispositif d'affichage (20) avec un contenu d'informations qui est étendu comparativement au contenu d'informations affiché dans la barre d'état (24);
un autre appareil d'affichage supplémentaire (60), le signal de sélection (16) comportant des informations supplémentaires concernant un autre point initial (23) situé à l'intérieur d'une partie de zone (26a, 26b) reproduisant le contenu d'une catégorie de contenu (30) et un autre point final (25) d'un mouvement de contact continu (21) situé plus près, qu'une distance prédéfinie, du bord droit ou gauche de la surface d'affichage (22) du dispositif d'affichage (20), vue depuis l'utilisateur, le processeur (10) étant conçu pour générer un autre signal vidéo ou de commande (18b) sur la base du signal de sélection (16) de sorte que le contenu de la partie de zone (26a, 26b), comportant le point initial (23), soit au moins en partie reproduit sur l'autre appareil d'affichage supplémentaire (60); et
un dispositif de sortie (14) qui est conçu pour délivrer le signal vidéo ou de commande (18, 18a) au niveau du dispositif d'affichage (20);
le processeur (10) étant conçu pour générer le signal vidéo ou de commande (18, 18a) de sorte que la barre d'état (24) soit reproduite par le dispositif d'affichage (20) au niveau du bord supérieur de la surface d'affichage (22) du dispositif d'affichage (20), vue depuis l'utilisateur,
pour masquer la barre d'état (24), la barre d'état (24) étant contactée sans mouvement ultérieur, et le contact étant effectué dans une zone vide de la barre d'état (24) à laquelle n'est associée aucune catégorie d'informations (30), ou le point initial (23) d'un mouvement de contact (21) étant appliqué juste au-dessous de la barre d'état, et le mouvement de contact étant effectué en étant dirigé vers le haut.

2. Système de reproduction d'informations (15) selon la revendication 1, le processeur (10) étant conçu pour générer le signal vidéo ou de commande (18, 18a) sur la base du signal de sélection (16) de sorte que le contenu d'une catégorie de contenu (30) affichée de manière sélectionnable à l'emplacement du point initial (23) soit reproduit par le dispositif d'affichage (20) dans au moins une partie (26a, 26b) de la zone d'affichage comprenant le point final (25) avec un contenu d'informations étendu comparativement au contenu d'informations affiché dans la barre d'état (24).

3. Système de reproduction d'informations (15) selon l'une des revendications précédentes, le processeur (10) étant conçu pour générer le signal vidéo ou de commande (18, 18a) de sorte que, en plus du contenu d'une catégorie de contenu (30) affichée de manière sélectionnable à l'emplacement du point initial (23), un contenu d'au moins une autre catégorie de contenu (30) soit reproduit par le dispositif d'affichage (20) dans au moins une autre partie (26a, 26b) de la zone d'affichage.

4. Système de reproduction d'informations (15) selon l'une des revendications précédentes, le point final (25) étant situé à l'intérieur d'une partie (26a, 26b) de la zone d'affichage qui comporte déjà des contenus d'une catégorie de contenu (30), le processeur (10) étant conçu pour générer le signal vidéo ou de commande (18, 18a) sur la base du signal de sélection (16) de sorte que le contenu déjà présent dans la partie de zone (26a, 26b) comprenant le point final (25) soit reproduit par le dispositif d'affichage (20) de manière décalée jusque dans une autre partie de zone (26a, 26b).

5. Système de reproduction d'informations (15) selon l'une des revendications précédentes, le signal de sélection (16) comportant des informations supplémentaires concernant un point initial (23) situé à l'intérieur d'une zone de bord comprenant la barre d'état (24) et un point final (25) d'un mouvement de contact continu (21) situé plus près du bord de la surface d'affichage (22) que le point initial (23) ou des informations supplémentaires concernant un point de contact situé à l'intérieur d'une zone de la barre d'état (24) qui n'est associée à aucune catégorie d'informations, la zone de bord s'étendant depuis un bord de la zone d'affichage (22) qui délimite la barre d'état (24) jusqu'à une distance qui correspond à deux fois la largeur de la barre d'état (24), le processeur (10) étant conçu pour générer le signal vidéo ou de commande (18, 18a) sur la base du signal de sélection (16) de sorte que la barre d'état (24) soit masquée sur la base du contact détecté.

6. Système de reproduction d'informations (15) selon la revendication 5, le signal de sélection (16) comportant des informations concernant un point initial (23) situé éloigné au maximum du bord du dispositif d'affichage (20) d'une largeur de la barre d'état (24) et un point final (25) d'un mouvement de contact continu (21) qui est plus éloigné du bord du dispositif d'affichage (20) que le point initial (23), des informations concernant un point de contact éloigné du bord du dispositif d'affichage (20) au maximum de la largeur de la barre d'état (24) ou des informations concernant un utilisateur s'approchant du dispositif d'affichage (20), le processeur (10) étant conçu pour générer le signal vidéo ou de commande (18, 18a) sur la base du signal de sélection (16) de sorte que la barre d'état (24) soit affichée sur la surface d'affichage (22) du dispositif d'affichage (20).

7. Système de reproduction d'informations (15) selon l'une des revendications précédentes, le signal de sélection (16) comportant des informations concernant un point initial (23) situé à l'intérieur d'une parmi plusieurs parties de zone (26a, 26b) reproduisant chacune un contenu d'une catégorie d'informations différente et un point final (25) d'un mouvement de contact continu (21) qui est situé à l'intérieur d'une autre des plusieurs parties de zone (26a, 26b) reproduisant chacune un contenu d'une catégorie d'informations différente, le processeur (10) étant conçu pour générer le signal vidéo ou de commande (18, 18a) sur la base d'un signal de sélection (16) de sorte que la partie de zone (26a, 26b) comprenant le point initial (23) soit reproduite par le dispositif d'affichage (20) en étant décalée vers le point final (25) et la partie de zone (26a, 26b) comprenant le point final (25) soit reproduite par le dispositif d'affichage (20) en étant décalée en direction du point initial (23).

8. Système de reproduction d'informations (15) selon l'une des revendications précédentes, le signal de sélection (16) comportant des informations supplémentaires concernant un point initial (23) situé à l'intérieur d'une partie de zone (26a, 26b) reproduisant le contenu d'une catégorie de contenu (30) et un point final (25) d'un mouvement de contact continu (21) qui est situé à l'intérieur d'une zone de la barre d'état (24) à laquelle est associée en même temps une autre catégorie de contenu (30) pourvue d'un contenu, le processeur (10) étant conçu pour générer un signal vidéo ou de commande (18, 18a) sur la base du signal de sélection (16) de sorte que la catégorie de contenu pourvue d'un contenu d'informations réduit par rapport au contenu d'informations affiché dans la partie de zone (26a, 26b) soit reproduite par le dispositif d'affichage (20) dans la barre d'état (24) à la place de l'autre catégorie de contenu (30) pourvue d'un contenu.

9. Véhicule comprenant un système de reproduction d'informations (15) selon l'une des revendications précédentes.

10. Procédé (90) de délivrance d'informations à un utilisateur d'un véhicule, ledit procédé comprenant les étapes suivantes :
générer un signal de sélection (16) par le biais d'une surface d'affichage tactile (22) d'un dispositif d'affichage (20);
recevoir (92) le signal de sélection (16);
générer (94) un signal vidéo ou de commande (18, 18a) de sorte qu'une barre d'état (24) disposée sur un bord de la surface d'affichage tactile (22) du dispositif d'affichage (20) et une zone d'affichage adjacente à la barre d'état (24) soient reproduites sur la surface d'affichage (22) par le dispositif d'affichage (20) sur la base du signal vidéo ou de commande (18, 18a),
le signal de sélection (16) comportant des informations concernant un point initial (23) et un point final (25) d'un mouvement (21), effectué par un utilisateur, de contact continu avec la surface d'affichage (22) du dispositif d'affichage (20), le point initial (23) étant situé dans la zone de la barre d'état (24) et le point final (25) étant situé dans la zone d'affichage,
le signal vidéo ou de commande (18, 18a) étant généré sur la base du signal de sélection (16) de sorte qu'un contenu d'une catégorie de contenu (30) affichée de manière sélectionnable à l'emplacement du point initial (23) soit reproduit dans au moins une partie (26a, 26b) de la zone d'affichage, qui est située au moins partiellement dans une moitié de la zone d'affichage qui comprend le point final (25), par le dispositif d'affichage (20) avec un contenu d'informations qui est étendu comparativement au contenu d'informations affiché dans la barre d'état (24) ;
le signal de sélection (16) comportant des informations supplémentaires concernant un autre point initial (23) situé à l'intérieur d'une partie de zone (26a, 26b) reproduisant le contenu d'une catégorie de contenu (30) et un autre point final (25) d'un mouvement de contact continu (21) situé plus près, qu'une distance prédéfinie, du bord droit ou gauche de la surface d'affichage (22) du dispositif d'affichage (20), vue depuis l'utilisateur, le processeur (10) étant conçu pour générer un autre signal vidéo ou de commande (18b) sur la base du signal de sélection (16) de sorte que le contenu de la partie de zone (26a, 26b), comportant le point initial (23), soit au moins en partie reproduit sur l'autre appareil d'affichage supplémentaire (60); et
délivrer (96) le signal vidéo ou de commande (18, 18a) au dispositif d'affichage (20);
le processeur (10) étant conçu pour générer le signal vidéo ou de commande (18, 18a) de sorte que la barre d'état (24) soit reproduite par le dispositif d'affichage (20) au niveau du bord supérieur de la zone d'affichage (22) du dispositif d'affichage (20), vue depuis l'utilisateur,
pour masquer la barre d'état (24), la barre d'état (24) étant contactée sans mouvement ultérieur, et le contact étant alors effectué dans une zone vide de la barre d'état (24) qui n'est associée à aucune catégorie d'informations (30) ou le point initial (23) d'un mouvement de contact (21) étant situé juste au-dessous de la barre d'état, et le mouvement de contact étant effectué en étant dirigé vers le haut.

11. Programme comprenant un code de programme destiné à mettre en œuvre le procédé selon la revendication 10, lorsque le code de programme est exécuté sur un ordinateur, un processeur ou un composant matériel programmable.
